(19) Europäisches Patentamt
European Patent Office
Office européen des brevets

(11) EP 4 403 603 A1

(12) EUROPEAN PATENT APPLICATION
published in accordance with Art. 153(4) EPC

(43) Date of publication:
**24.07.2024 Bulletin 2024/30**

(21) Application number: **22867416.4**

(22) Date of filing: **08.09.2022**

(51) International Patent Classification (IPC):
***C08L 9/06*** (2006.01) ***C08K 3/04*** (2006.01)
***C08L 9/00*** (2006.01)

(52) Cooperative Patent Classification (CPC):
**C08K 3/04; C08L 9/00; C08L 9/06**

(86) International application number:
**PCT/JP2022/033791**

(87) International publication number:
**WO 2023/038095 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.09.2021 JP 2021148431**

(71) Applicants:
- **Japan Elastomer Co., Ltd.**
  **Tokyo 100-0006 (JP)**
- **Asahi Kasei Kabushiki Kaisha**
  **Tokyo 1000006 (JP)**

(72) Inventors:
- **YASUMOTO, Atsushi**
  **Tokyo 100-0006 (JP)**
- **SHIOTSUKI, Kohei**
  **Tokyo 100-0006 (JP)**
- **KONOMOTO, Tsuneaki**
  **Tokyo 100-0006 (JP)**

(74) Representative: **Strehl Schübel-Hopf & Partner**
**Maximilianstrasse 54**
**80538 München (DE)**

# (54) CROSSLINKED RUBBER COMPOSITION, METHOD FOR PRODUCING CROSSLINKED RUBBER COMPOSITION

(57) A crosslinked rubber composition which is a crosslinked product of a rubber composition including 100 parts by mass of a rubber component (A) including 10% by mass or more and 100% by mass or less of a hydrogenated conjugated diene-based polymer and having an iodine value of 10 or more and 370 or less, and 10 parts by mass or more and 120 parts by mass or less of carbon black (B), in which the hydrogenated conjugated diene-based polymer has a degree of hydrogenation of 10% or more and 99% or less, an aromatic vinyl monomer block content of less than 5% by mass and a weight average molecular weight of 150000 or more and 1500000 or less, and a change in shore A hardness after heating under air at 100°C for 72 hours compared with that before the heating satisfies the following expression (1): -10 < (Shore A hardness after heating) - (Shore A hardness before heating) < 5 ... (1).

EP 4 403 603 A1

**Description**

Technical Field

The present invention relates to a crosslinked rubber composition, and a method for producing a crosslinked rubber composition.

Background Art

A rubber material containing natural rubber excellent in vibration isolation characteristics such as compression set and dynamic magnification has been proposed as vibration isolation rubber for automobiles, trains, and the like (see, for example, Patent Document 1). A rubber material containing rubber excellent in heat resistance and ozone resistance, such as ethylene-propylene-diene rubber (EPDM), has also been proposed for requirements such as heat resistance and ozone resistance (see, for example, Patent Document 2). Furthermore, a rubber composition containing a hydrogenated styrene-butadiene block copolymer has been proposed as a rubber material excellent in balance between heat resistance and vibration isolation characteristics (see, for example, Patent Document 3).

Citation List

Patent Document

Patent Document 1: Japanese Patent Laid-Open No. 2004-292679
Patent Document 2: Japanese Patent Laid-Open No. 2018-119096
Patent Document 3: Japanese Patent Laid-Open No. 2018-35253

Summary of Invention

Technical Problem

However, EPDM-containing rubber materials have the problem of being sometimes insufficient in vibration isolation characteristics. In addition, hydrogenated styrene-butadiene block copolymer-containing rubber compositions have the problem of being insufficient in vibration isolation characteristics if styrene domains are formed.
Therefore, there is a demand for a rubber composition not only keeping practically sufficient processability and ozone resistance, but also satisfying both vibration isolation characteristics and heat resistance.
In view of the above problems of the prior art, an object of the present invention is to provide a crosslinked rubber composition excellent in balance between vibration isolation characteristics and heat resistance.

Solution to Problem

The present inventors have made intensive studies in order to solve the above problems of the prior art, and as a result, have found that a crosslinked rubber composition excellent in vibration isolation characteristics and heat resistance is obtained with a rubber composition including a rubber component (A) including a hydrogenated conjugated diene-based polymer having a specified structure, and carbon black (B) as a filler, in which the change in hardness before and after predetermined heating conditions falls within a specified range, thereby leading to completion of the present invention.
In other words, the present invention is as follows.

[1] A crosslinked rubber composition which is a crosslinked product of a rubber composition containing

100 parts by mass of a rubber component (A) containing 10% by mass or more and 100% by mass or less of a hydrogenated conjugated diene-based polymer and having an iodine value of 10 or more and 370 or less, and 10 parts by mass or more and 120 parts by mass or less of carbon black (B), wherein
the hydrogenated conjugated diene-based polymer has a degree of hydrogenation of 10% or more and 99% or less, an aromatic vinyl monomer block content of less than 5% by mass and a weight average molecular weight of 150000 or more and 1500000 or less, and
a change in shore A hardness after heating under air at 100°C for 72 hours compared with that before the

heating satisfies the following expression (1):

$$-10 < \text{(Shore A hardness after heating)} - \text{(Shore A hardness before heating)} < 5 \quad (1)$$

[2] The crosslinked rubber composition according to [1], wherein the hydrogenated conjugated diene-based polymer has a glass transition temperature of -50°C or less.
[3] The crosslinked rubber composition according to [1] or [2], wherein an amount of vinyl bond in the hydrogenated conjugated diene-based polymer is 0.1% by mol or more and less than 10% by mol.
[4] The crosslinked rubber composition according to any one of [1] to [3], wherein the hydrogenated conjugated diene-based polymer has a degree of modification of 40% or more and 99% or less.
[5] The crosslinked rubber composition according to any one of [1] to [4], wherein the hydrogenated conjugated diene-based polymer has a Mooney stress relaxation (MSR) at 100°C of 0.8 or less.
[6] The crosslinked rubber composition according to any one of [1] to [5], satisfying the following expression (2) :

$$0.5\ \text{MPa} < \text{(Storage elastic modulus at a strain of 0.1\% at 50°C)} - \text{(Storage elastic modulus at a strain of 10\% at 50°C)} < 10\ \text{MPa} \quad (2)$$

[7] The crosslinked rubber composition according to any one of [1] to [6], wherein the rubber component (A) contains 10% by mass or more and 90% by mass or less of a rubber-like polymer other than the hydrogenated conjugated diene-based polymer, and the rubber-like polymer other than the hydrogenated conjugated diene-based polymer is at least one selected from the group consisting of styrene-butadiene rubber, styrene-isoprene rubber, natural rubber, polybutadiene, polyisoprene rubber, ethylene-propylene-diene rubber, ethylene-propylene rubber, butyl rubber, polyurethane, epichlorohydrin rubber, silicone rubber, acrylic rubber, nitrile rubber, chloroprene rubber, and fluororubber.
[8] The crosslinked rubber composition according to any one of [1] to [7], wherein the hydrogenated conjugated diene-based polymer has a titanium content of 1 ppm or more and 100 ppm or less and an aluminum content of 2 ppm or less.
[9] A method for producing the crosslinked rubber composition according to any one of [1] to [8], containing
a step of crosslinking the hydrogenated conjugated diene-based polymer by sulfur and a vulcanization accelerator, or organic peroxide.
[10] A method for producing a crosslinked rubber composition containing a rubber component (A) and carbon black (B), containing

a step of forming a hydrogenated conjugated diene-based polymer having a degree of hydrogenation of 10% or more and 99% or less, an aromatic vinyl monomer block content of less than 5% by mass, a weight average molecular weight of 150000 or more and 1500000 or less, a glass transition temperature of -50°C or less, and an aromatic vinyl monomer unit content of 5% by mass or more,
a step of obtaining a rubber component (A) containing 10% by mass or more and 100% by mass or less of a hydrogenated conjugated diene-based polymer and having an iodine value of 10 or more and 370 or less,
a step of mixing 100 parts by mass of the rubber component (A) and 10 parts by mass or more and 120 parts by mass or less of carbon black (B) to obtain a rubber composition, and
a step of crosslinking the rubber composition,
wherein a crosslinked rubber composition in which a change in shore A hardness after heating under air at 100°C for 72 hours compared with that before the heating satisfies the following expression (1) is obtained:

$$-10 < \text{(Shore A hardness after heating)} - \text{(Shore A hardness before heating)} < 5 \quad (1)$$

[11] The method for producing crosslinked rubber composition according to [9] or [10], wherein, in the crosslinking step, the rubber composition containing the rubber component (A) and the carbon black (B) is crosslinked in the state of being molded.
[12] A vibration isolation rubber containing the crosslinked rubber composition according to any one of [1] to [8] .
[13] A conveyor belt containing the crosslinked rubber composition according to any one of [1] to [8].
[14] A shoe sole containing the crosslinked rubber composition according to any one of [1] to [8].
[15] A hose containing the crosslinked rubber composition according to any one of [1] to [8].

[16] A seal material containing the crosslinked rubber composition according to any one of [1] to [8].
[17] A rubber roller containing the crosslinked rubber composition according to any one of [1] to [8].

Advantageous Effect of Invention

According to the present invention, there can be provided a crosslinked rubber composition favorable in balance between vibration isolation characteristics and heat resistance.

Description of Embodiments

Hereinafter, any embodiment for carrying out the present invention (hereinafter, referred to as "the present embodiment".) is described in detail.
Herein, the following present embodiment is illustrative for describing the present invention, and the present invention is not limited to the following embodiment. The present invention can be appropriately modified and carried out within the gist thereof.

[Crosslinked rubber composition]

A crosslinked rubber composition of the present embodiment is a crosslinked rubber composition obtained by crosslinking a rubber composition including 100 parts by mass of a rubber component (A) including 10% by mass or more and 100% by mass or less of a hydrogenated conjugated diene-based polymer and having an iodine value of 10 or more and 370 or less, and 10 parts by mass or more and 120 parts by mass or less of carbon black (B).
The hydrogenated conjugated diene-based polymer has a degree of hydrogenation of 10% or more and 99% or less, an aromatic vinyl monomer block content of less than 5% by mass and a weight average molecular weight of 150000 or more and 1500000 or less.
Hereinafter, the hydrogenated conjugated diene-based polymer having the above configuration, included in the rubber component (A), may be designated as "rubber-like polymer 1".
The change in shore A hardness as the durometer hardness measured according to Type A of JIS K6253-3, before and after heating under air at 100°C for 72 hours, of the crosslinked rubber composition of the present embodiment satisfies the following expression (1). The shore A hardness can be expressed by (A hardness value (°)), and the following expression represents only the value of the difference between numerical values.

$$-10 < (\text{Hardness after heating}) - (\text{Hardness before heating}) < 5 \quad (1)$$

The above configuration allows the balance between vibration isolation characteristics and heat resistance to be favorable.
The description in the present specification is made under the assumption that vibration isolation characteristics of the crosslinked rubber composition correspond to performance which can be evaluated with dynamic magnification as an index and excellent vibration isolation characteristics have the same meaning as a low dynamic magnification. The dynamic magnification herein means the ratio between the dynamic elastic modulus and the static elastic modulus (Dynamic elastic modulus/Static elastic modulus), or the ratio between the dynamic spring constant and the static spring constant (Dynamic spring constant/Static spring constant).
The dynamic spring constant, the static spring constant, and the dynamic magnification can be each measured by the method described in JIS K6385. It can be generally said that a lower dynamic spring constant and a higher static spring constant result in a lower dynamic magnification to allow for a crosslinked rubber composition more excellent in vibration isolation characteristics.
A reduction in dynamic spring constant and an enhancement in static spring constant contradict each other and are difficult to simultaneously satisfy. However, the present inventors have found that the dynamic magnification of the crosslinked rubber composition is lowered by not only adopting a specified hydrogenated conjugated diene-based polymer described below, as the rubber component, but also blending a proper amount of carbon black, with examination of the dynamic magnification of the crosslinked rubber composition in combinations of various rubber components and fillers, and thus have completed the present invention. In a case where the weight average molecular weight is less than 150000 and the degree of hydrogenation is more than 99% in the hydrogenated conjugated diene-based polymer, and/or in a case where the iodine value of the rubber component (A) is less than 10, the crosslinked rubber composition is reduced in crosslinking density and thus reduced in static spring constant, and then deteriorated in dynamic magnification. In a case where the content of carbon black in the crosslinked rubber composition is less than 10 parts by mass, the crosslinked rubber composition is reduced in elastic modulus and thus reduced in static spring constant, and then

deteriorated in dynamic magnification.

On the other hand, in a case where the molecular weight of the hydrogenated conjugated diene-based polymer is more than 1500000 and/or in a case where the content of carbon black in the crosslinked rubber composition is more than 120 parts by mass, dispersion failure of a filler due to deterioration in processability tends to cause an increase in dynamic spring constant and deterioration in dynamic magnification.

The crosslinked rubber composition of the present embodiment is a crosslinked product of a rubber composition including the rubber component (A) and the carbon black (B), and a rubber-like polymer other than the hydrogenated conjugated diene-based polymer as the rubber-like polymer 1 may be, if necessary, used. Two or more rubber-like polymers may also be used.

Furthermore, an inorganic filler such as silica may be included as a filler other than the carbon black, and a silane coupling agent, a softener for rubber, wax, a crosslinker such as sulfur or peroxide, a vulcanization accelerator, and/or a vulcanization aid, as other additive(s), may also be included.

Hereinafter, each component is described.

(Rubber component (A))

The crosslinked rubber composition of the present embodiment is a crosslinked product of a rubber composition including the rubber component (A). The iodine value of the rubber component (A) is 10 or more and 370 or less.

The rubber component (A) constituting the crosslinked rubber composition of the present embodiment includes 10% by mass or more and 100% by mass of the hydrogenated conjugated diene-based polymer (rubber-like polymer 1).

The content of the hydrogenated conjugated diene-based polymer (rubber-like polymer 1) in the rubber component (A) is 10% by mass or more, preferably 15% by mass or more, more preferably 20% by mass or more from the viewpoint of heat resistance of the crosslinked rubber composition of the present embodiment. The content is 100% by mass or less, preferably 80% by mass or less, more preferably 75% by mass or less from the viewpoint of vibration isolation characteristics of the crosslinked rubber composition of the present embodiment.

On the other hand, in a case where the rubber composition of the present embodiment is utilized in an application of a packing, a seal material, a rubber roller or the like, the compression set of the crosslinked rubber composition is demanded to be small, whereas restrictions on vibration isolation characteristics are small. Accordingly, the content of the hydrogenated conjugated diene-based polymer in the rubber component (A) is herein preferably 80% by mass or more, more preferably 90% by mass or more, further preferably 95% by mass or more, still more preferably 100% by mass.

The rubber component (A) may include a rubber component other than the hydrogenated conjugated diene-based polymer (rubber-like polymer 1). The rubber component other than the hydrogenated conjugated diene-based polymer is preferably a rubber-like polymer 2 described below.

<Rubber-like polymer 1: hydrogenated conjugated diene-based polymer>

The hydrogenated conjugated diene-based polymer (rubber-like polymer 1) included in the rubber component (A) is one obtained by polymerization or copolymerization of at least a conjugated diene monomer and, if necessary, an aromatic vinyl monomer and then hydrogenation of some of conjugated diene monomer units.

Herein, the "monomer" refers to a compound before polymerization and the "monomer unit" refers to a constituent unit constituting a polymer.

Examples of the conjugated diene monomer include, but not limited to the following, 1,3-butadiene, isoprene, 2,3-dimethyl-1,3-butadiene, 1,3-pentadiene, 3-methyl-1,3-pentadiene, 1,3-hexadiene, and 1,3-heptadiene. In particular, 1,3-butadiene and isoprene are preferable and 1,3-butadiene is more preferable from the viewpoint of industrial availability. These may be used singly or in combinations of two or more kinds thereof.

Examples of the aromatic vinyl monomer include, but not limited to the following, styrene, o-methylstyrene, m-methylstyrene, p-methylstyrene, o,p-dimethylstyrene, o-ethylstyrene, m-ethylstyrene, p-ethylstyrene, $\alpha$-methylstyrene, vinylethylbenzene, vinylxylene, vinylnaphthalene, and diphenylethylene. In particular, styrene is preferable from the viewpoint of industrial availability. These may be used singly or in combinations of two or more kinds thereof.

The hydrogenated conjugated diene-based polymer preferably includes an aromatic vinyl monomer unit from the viewpoint of enhancements in characteristics such as breaking strength and 300% modulus of the crosslinked rubber composition of the present embodiment, and the aromatic vinyl monomer unit content is more preferably 3% by mass or more, further preferably 5% by mass or more. On the other hand, the content is preferably 55% by mass or less, more preferably 50% by mass or less, further preferably 47% by mass or less from the viewpoint of an improvement in processability of the crosslinked rubber composition of the present embodiment.

In particular, in a case where the crosslinked rubber composition of the present embodiment is used in an application of vibration isolation rubber or a vibration control material to which a high load is to be applied, breaking strength and 300% modulus are preferably higher and the content of the aromatic vinyl monomer unit in the hydrogenated

conjugated diene-based polymer is preferably 3% by mass or more.

In a case where the glass transition temperature of the hydrogenated conjugated diene-based polymer is, for example, -50°C or less, the content of the aromatic vinyl monomer unit is preferably 20% by mass or less, more preferably 18% by mass or less.

The content of the aromatic vinyl monomer unit in the hydrogenated conjugated diene-based polymer can be controlled within the above numerical value range, by adjustment of the amount of the aromatic vinyl monomer added and the polymerization time in the polymerization step.

Examples of other monomer used in the hydrogenated conjugated diene-based polymer include, but not limited to the following, non-conjugated polyene monomers such as ethylidene norbornene, dicyclopentadiene, vinyl norbornene, and divinylbenzene; and cyclic non-conjugated polyene monomers such as dicyclopentadiene, vinyl norbornene, and ethylidene norbornene.

Use of such other monomer tends to result in a more enhancement in balance among heat resistance and ozone resistance in use of the crosslinked rubber composition of the present embodiment for vibration isolation rubber, and vibration isolation characteristics.

These may be used singly or in combinations of two or more kinds thereof.

[Aromatic vinyl monomer block content]

The content of the aromatic vinyl monomer block in the hydrogenated conjugated diene-based polymer is less than 5.0% by mass, preferably 4.0% by mass or less, more preferably 3.5% by mass or less, further preferably 3.0% by mass or less from the viewpoint of a reduction in dynamic magnification serving as each index of wear resistance and vibration isolation characteristics of the crosslinked rubber composition of the present embodiment.

The "aromatic vinyl monomer block" herein means a chain structure of eight or more aromatic vinyl monomer units.

The method for measuring the content of the aromatic vinyl monomer block is not particularly limited, and examples thereof include a known method as described in International Publication No. WO2014/133097, for example, measurement of the amount of a structure of a chain of styrene units with NMR. In a case where the hydrogenated conjugated diene-based polymer (rubber-like polymer 1) is a butadiene-styrene copolymer, examples of other method include a method including decomposing such a butadiene-styrene copolymer according to the Kolthoff method (method described in I. M. KOLTHOFF, et al., J. Polym. Sci. 1,429 (1946)) and analyzing the amount of polystyrene insoluble in methanol.

Specifically, the content can be measured by a method described in Examples below.

The content of the aromatic vinyl monomer block in the hydrogenated conjugated diene-based polymer can be controlled by adjustment of polymerization conditions. For example, the content can be controlled within the above numerical value range by adjustment of the amount of addition of the aromatic vinyl monomer and the amount of addition of a polymerization initiator, in a method including obtaining a conjugated diene-based polymer by polymerization of the aromatic vinyl monomer at the beginning of polymerization and then addition of the conjugated diene monomer, or a method including forming a conjugated diene-based polymer by polymerization, and adding the aromatic vinyl monomer before deactivation of an active end.

[Amount of 1,2-vinyl bond before hydrogenation]

The amount of 1,2-vinyl bond in a conjugated diene monomer unit before hydrogenation, in the hydrogenated conjugated diene-based polymer, is preferably 20% by mol or more, more preferably 23% by mol or more, further preferably 25% by mol or more from the viewpoint of a reduction in crystallinity of a polymer hydrogenated. The amount of 1,2-vinyl bond in the conjugated diene monomer unit is preferably 65% by mol or less, more preferably 62% by mol or less, further preferably 59% by mol or less from the viewpoint of flexibility of the crosslinked rubber composition of the present embodiment and an improvement in processability during preparation of the crosslinked rubber composition of the present embodiment.

The amount of 1,2-vinyl bond before hydrogenation can be measured by $^{1}$H-NMR. The amount of 1,2-vinyl bond before hydrogenation can also be controlled within the above numerical value range by adjustment of the polymerization temperature and the amount of addition of a polar compound.

The polar compound here used can be, but not limited to the following, for example, an ether compound such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, or 2,2-bis(2-oxolanyl)propane; a tert-amine compound such as tetramethylethylenediamine, dipiperidinoethane, trimethylamine, triethylamine, pyridine, or quinuclidine; an alkali metal alkoxide compound such as potassium-tert-amylate, potassium-tert-butyrate, sodium-tert-butyrate, or sodium amylate; or a phosphine compound such as triphenylphosphine.

These polar compounds may be used singly or in combinations of two or more kinds thereof.

The amount of use of the polar compound is not particularly limited, can be selected depending on the object and the like, and is preferably 0.01 mol or more and 100 mol or less per mol of the polymerization initiator.

[Amount of vinyl bond in hydrogenated conjugated diene-based polymer]

The amount of vinyl bond in the hydrogenated conjugated diene-based polymer is preferably 0.1% by mol or more, more preferably 0.5% by mol or more, further preferably 1.0% by mol or more from the viewpoint of crosslinking ability of the hydrogenated conjugated diene-based polymer. On the other hand, the amount is preferably less than 10% by mol, more preferably 7% by mol or less, further preferably 5% by mol or less from the viewpoint of heat resistance of the crosslinked rubber composition of the present embodiment.

The "amount of vinyl bond in the hydrogenated conjugated diene-based polymer" is the amount of 1,2-vinyl bond which is still present as a 1,2-vinyl bond without being hydrogenated in the hydrogenated conjugated diene-based polymer, of a conjugated diene monomer unit not hydrogenated and a conjugated diene monomer unit hydrogenated.

The amount of vinyl bond in the hydrogenated conjugated diene-based polymer can be measured by $^1$H-NMR. Specifically, the amount can be measured by a method described in Examples below.

The amount of vinyl bond in the hydrogenated conjugated diene-based polymer can be controlled within the above numerical value range by adjustment of the amount of 1,2-vinyl bond before hydrogenation, the hydrogenation reaction temperature, and the type of a catalyst and the amount of addition of hydrogen in hydrogenation reaction.

[Degree of hydrogenation]

The degree of hydrogenation in the hydrogenated conjugated diene-based polymer (rubber-like polymer 1) is 10% or more, preferably 20% or more, more preferably 30% or more, further preferably 60% or more from the viewpoint of ozone resistance of the crosslinked rubber composition of the present embodiment. On the other hand, the degree of hydrogenation is 99% or less, preferably 97% or less, more preferably less than 90%, further preferably less than 80% from the viewpoint that sufficient crosslinking reaction of the hydrogenated conjugated diene-based polymer is allowed to occur.

The degree of hydrogenation in the hydrogenated conjugated diene-based polymer is a molar ratio of a saturated bond formed by hydrogenation reaction of a double bond in a conjugated diene monomer unit-derived structure.

In a case where the compression set of the crosslinked rubber composition of the present embodiment is smaller, the degree of hydrogenation in the hydrogenated conjugated diene-based polymer is preferably 30% or more, more preferably 40% or more, further preferably 45% or more in order to increase thermal stability. On the other hand, the degree of hydrogenation in the hydrogenated conjugated diene-based polymer is preferably 99% or less, more preferably 95% or less, further preferably 90% or less in order to increase the crosslinking density of the crosslinked rubber composition.

Examples of the method including copolymerizing and then hydrogenating the conjugated diene monomer and, if necessary, the aromatic vinyl monomer include a method including polymerization of the conjugated diene monomer or, if necessary, copolymerization thereof with other monomer according to anionic polymerization with various additives and conditions, and then hydrogenation of the resultant, as described in International Publication No. WO96/05250, Japanese Patent Laid-Open No. 2000-053706, International Publication No. WO2003/085010, International Publication No. WO2019/151126, International Publication No. WO2019/151127, International Publication No. WO2002/002663, or International Publication No. WO2015/006179.

The degree of hydrogenation can be measured by a method described in Examples below.

The degree of hydrogenation can be controlled within the above numerical value range by adjustment of the amount of addition of hydrogen, the reaction temperature, the reaction time, the type of a catalyst and the amount of addition of the catalyst in hydrogenation reaction.

[Weight average molecular weight]

The weight average molecular weight of the hydrogenated conjugated diene-based polymer (rubber-like polymer 1) is 150000 or more, preferably 200000 or more, more preferably 220000 or more, further preferably 250000 or more from the viewpoint of the compression set, tensile strength and elongation of the crosslinked rubber composition of the present embodiment. On the other hand, the weight average molecular weight is 1500000 or less, more preferably 1200000 or less, further preferably 1000000 or less from the viewpoint of processability of the crosslinked rubber composition of the present embodiment.

[Molecular weight distribution]

The molecular weight distribution (= Weight average molecular weight/Number average molecular weight) of the hydrogenated conjugated diene-based polymer (rubber-like polymer 1) is preferably 2.0 or less, more preferably 1.8 or less, further preferably 1.6 or less from the viewpoint of an enhancement in polymerization reproducibility. On the other hand, the molecular weight distribution is preferably 1.05 or more, more preferably 1.2 or more, further preferably 1.4 or more from the viewpoint of processability of the crosslinked rubber composition of the present embodiment.
The weight average molecular weight and the molecular weight distribution can be calculated from the molecular weight in terms of polystyrene, measured by GPC (gel permeation chromatography). Specifically, the molecular weight can be measured by a method described in Examples below.
The weight average molecular weight and the molecular weight distribution can be controlled within the above numerical value ranges by adjustment of the amount of addition of the monomer, the timing of addition, and the amount of addition of the polymerization initiator in the polymerization step.

[Mooney viscosity]

The Mooney viscosity at 100°C of the hydrogenated conjugated diene-based polymer (rubber-like polymer 1), when measured with an L-type rotor, is preferably 150 or less, more preferably 130 or less, further preferably 120 or less from the viewpoint of processability of the crosslinked rubber composition of the present embodiment. On the other hand, the Mooney viscosity is preferably 30 or more, more preferably 40 or more, further preferably 50 or more from the viewpoint of tensile strength and tensile elongation of the crosslinked rubber composition.
The Mooney viscosity of the hydrogenated conjugated diene-based polymer can be measured by a method described in Examples below.

[Mooney stress relaxation]

The Mooney stress relaxation (MSR) at 100°C of the hydrogenated conjugated diene-based polymer (rubber-like polymer 1) is preferably 0.80 or less, more preferably 0.75 or less, further preferably 0.70 or less from the viewpoint of suppression of cold flowability of the crosslinked rubber composition of the present embodiment and an enhancement in modulus of the crosslinked rubber composition of the present embodiment. The lower limit is not particularly limited and is preferably 0.10 or more from the viewpoint of processability during preparation of the crosslinked rubber composition of the present embodiment.
The Mooney stress relaxation at 100°C of the hydrogenated conjugated diene-based polymer can be measured by a method described in Examples below.
The Mooney stress relaxation at 100°C of the hydrogenated conjugated diene-based polymer can be controlled within the above numerical value range by an increase in content of a branched component and an enhancement in degree of hydrogenation.

[Glass transition temperature]

The glass transition temperature (Tg) of the hydrogenated conjugated diene-based polymer (rubber-like polymer 1) is preferably -25°C or less, more preferably - 35°C or less, further preferably -50°C or less, still more preferably -56°C or less.
The glass transition temperature of the hydrogenated conjugated diene-based polymer can be controlled within the above range by adjustment of the content of the aromatic vinyl monomer unit and the amount of vinyl bond, and the degree of hydrogenation.
When the glass transition temperature of the hydrogenated conjugated diene-based polymer falls within the above range, the vibration isolation rubber, which is produced using the crosslinked rubber composition of the present embodiment, tends to be excellent in vibration isolation characteristics and fracture characteristics under a low-temperature condition.
In order that the glass transition temperature of the hydrogenated conjugated diene-based polymer is -50°C or less in control of the glass transition temperature of the hydrogenated conjugated diene-based polymer, for example, in a case where the hydrogenated conjugated diene-based polymer is a hydrogenated polymer of a random copolymer of styrene and butadiene and the degree of hydrogenation is 10%, the styrene content is preferably 18% by mass or less and the amount of 1,2-vinyl bond in the conjugated diene monomer unit before hydrogenation is preferably 15% by mol or more and 40% by mol or less. On the other hand, in a case where the degree of hydrogenation is 90%, the styrene content is preferably 10% by mass or less and the amount of 1,2-vinyl bond in the conjugated diene monomer unit before hydrogenation is preferably 20% by mol or more and 40% by mol or less.

The glass transition temperature of the hydrogenated conjugated diene-based polymer is -50°C or less and thus a crosslinked rubber composition excellent in low temperature characteristics is obtained.

The glass transition temperature of the crosslinked rubber composition of the present embodiment highly depends on the glass transition temperature of the hydrogenated conjugated diene-based polymer, and is generally shifted to the higher temperature than the glass transition temperature of the hydrogenated conjugated diene-based polymer. The reason for this is because, for example, mobility of a molecular chain is reduced due to crosslinking. It is necessary from the viewpoint of use under a low-temperature environment that not only the glass transition temperature of the crosslinked rubber composition be reduced, but also the changes in physical properties including storage elastic modulus and hardness in a usage temperature region be small. In the case of use under a low-temperature environment, the crosslinked rubber composition is needed to have sufficient flexibility at least even under a low-temperature environment of -20°C, and the glass transition temperature of the hydrogenated conjugated diene-based polymer is preferably controlled to -50°C or less from the viewpoint of control of the glass transition temperature of the crosslinked rubber composition to -20°C or less. The glass transition temperature of the hydrogenated conjugated diene-based polymer has a large influence on the glass transition temperature of the crosslinked rubber composition, and the glass transition temperature of the hydrogenated conjugated diene-based polymer is allowed to be -50°C or less, resulting in a tendency to easily control the glass transition temperature of the crosslinked rubber composition to -20°C or less. Thus, flexibility of the crosslinked rubber composition under a temperature condition of -20°C tends to be able to be ensured, and furthermore the crosslinked rubber composition, which is small in changes in physical properties including elastic modulus in a region of -20°C to room temperature and small in temperature dependence, tends to be able to be obtained.

The glass transition temperature of the crosslinked rubber composition is preferably -30°C or less, more preferably -40°C or less for low temperature characteristics and a reduction in temperature dependence. It is preferable from the viewpoint of control of the glass transition temperature of the crosslinked rubber composition in the above numerical value range that the glass transition temperature of the hydrogenated conjugated diene-based polymer be -50°C or less and furthermore, in the case of combination use of the hydrogenated conjugated diene-based polymer and other polymer, a material good in compatibility be used.

The glass transition temperatures of the hydrogenated conjugated diene-based polymer and the crosslinked rubber composition of the present embodiment are each defined as the glass transition temperature at the peak top (Inflection point) of a DSC differential curve of a DSC curve recorded with a temperature rise in a predetermined temperature range, according to ISO 22768:2006. Specifically, the glass transition temperature can be measured by a method described in Examples described below.

[Degree of modification]

The hydrogenated conjugated diene-based polymer (rubber-like polymer 1) preferably contains nitrogen atom from the viewpoint of compression set and wear resistance of the crosslinked rubber composition of the present embodiment. Such a nitrogen atom can be introduced by use of a modifying agent. Thus, dispersibility of the carbon black (B) as the filler tends to be able to be enhanced.

The degree of modification of the hydrogenated conjugated diene-based polymer is preferably 40% or more, more preferably 60% or more, further preferably 70% or more from the viewpoint of dispersibility of silica and/or the carbon black as the filler. The upper limit of the degree of modification is not particularly limited, and is preferably 99% or less, more preferably 98% or less, further preferably 95% or less, still more preferably 90% or less from the viewpoint of a decrease in viscosity of a blended product after kneading and thus an improvement in processability.

In a case where the compression set of the crosslinked rubber composition of the present embodiment is desirably smaller, dispersibility of the filler is preferably increased. A functional group high in affinity and/or reactivity with the filler is preferably introduced into the hydrogenated conjugated diene-based polymer from such a viewpoint, and the degree of modification of the hydrogenated conjugated diene-based polymer is preferably 50% or more, more preferably 60% or more, further preferably 70% or more from the viewpoint of a sufficient increase in affinity and/or reactivity with the filler.

The "coupling agent" herein represents a compound which generates a branched component of 2 branches or more. The "modifying agent" herein represents a compound having a nitrogen atom and being capable of binding to a polymer to be modified. A compound having a nitrogen atom and generating a branched component of 2 branches or more serves as not only a coupling agent, but also a modifying agent.

The "degree of modification" herein represents the mass ratio of a polymer having a nitrogen atom-containing functional group based on the total amount of the hydrogenated conjugated diene-based polymer. The position of introduction of a nitrogen atom into the hydrogenated conjugated diene-based polymer may be any of a polymerization initiation end, a molecular chain (including graft), and a polymerization end.

In a case where the hydrogenated conjugated diene-based polymer is produced by polymerization of the conjugated diene monomer and then hydrogenation of the resultant, a method including introducing a nitrogen atom

with a nitrogen atom-containing coupling agent is preferably applied from the viewpoint of providing polymerization productivity and a high degree of modification.

The degree of modification of the hydrogenated conjugated diene-based polymer can be measured by a method described in Examples below.

The degree of modification of the hydrogenated conjugated diene-based polymer can be controlled within the above numerical value range by adjustment of the amount of addition of a modifying agent.

The nitrogen atom-containing coupling agent is preferably, for example, an isocyanate compound, an isothiocyanate compound, an isocyanuric acid derivative, a nitrogen group-containing carbonyl compound, a nitrogen group-containing vinyl compound, a nitrogen group-containing epoxy compound, or a nitrogen group-containing alkoxysilane compound, from the viewpoint of polymerization productivity and a high degree of modification.

The number of branches in the coupling agent is preferably larger from the viewpoint of a reduction in viscosity of the crosslinked rubber composition of the present embodiment and a reduction in cracking generation in a blended product sheet. The number of branches in the coupling agent is not particularly limited, and is preferably 3 branches or more, more preferably 4 branches or more from the viewpoint of an enhancement in processability during preparation of the crosslinked rubber composition of the present embodiment. The upper limit of the number of branches is not particularly limited, and is preferably 30 branches or less from the viewpoint of productivity.

Such a nitrogen atom-containing coupling agent is more preferably a nitrogen group-containing alkoxysilane compound or a nitrogen group-containing polyfunctional modifying agent from the viewpoint of reactivity.

Examples of the nitrogen group-containing alkoxysilane compound include, but not limited to the following, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N-(3-(bis(3-(trimethoxysilyl)propyl)amino)propyl)-N-methyl-N'-(3-(methyl(3-(trimethoxysilyl)propyl)amino)propyl)-N'-(3-(trimethoxysilyl)propyl)-1,3-propanediamine.

Examples of the nitrogen group-containing polyfunctional modifying agent include, but not limited to the following, a compound having one or more functional groups selected from the group consisting of an epoxy group, a carbonyl group, a carboxylic acid ester group, a carboxylic acid amide group, an acid anhydride group, a phosphoric acid ester group, a phosphorus acid ester group, an epithio group, a thiocarbonyl group, a thiocarboxylic acid ester group, a dithiocarboxylic acid ester group, a thiocarboxylic acid amide group, an imino group, an ethyleneimino group, a halogen group, an alkoxysilyl group, an isocyanate group, a thioisocyanate group, a conjugated diene group, and an arylvinyl group, and having at least one nitrogen atom in the compound.

When the number of moles of such a functional group is calculated, such calculation is made with one functionality in the case of each of an epoxy group, a carbonyl group, an epithio group, a thiocarbonyl group, an imino group, an ethyleneimino group, a halogen group, a conjugated diene group, an arylvinyl group, and an alkoxy group of an alkoxysilyl group, bi-functionality in the case of each of a carboxylic acid ester group, a carboxylic acid amide group, an acid anhydride group, a thiocarboxylic acid ester group, a dithiocarboxylic acid ester group, a thiocarboxylic acid amide group, an isocyanate group, and a thioisocyanate group, or trifunctionality in the case of each of a phosphoric acid ester group and a phosphorus acid ester group.

The polyfunctional modifying agent preferably usable in modification of the hydrogenated conjugated diene-based polymer (rubber-like polymer 1) included in the crosslinked rubber composition of the present embodiment is a polyfunctional modifying agent where the total functionality of the functional group in one molecule is 2 or more, more preferably a polyfunctional modifying agent where the total functionality is 3 or more.

In a case where a modified polymer is used as the hydrogenated conjugated diene-based polymer included in the crosslinked rubber composition of the present embodiment, not only the above coupling agent and modifying agent, but also a polyfunctional modifying agent described below, other than the nitrogen group-containing polyfunctional modifying agent, and/or a nitrogen atom-free coupling agent can also be used in preparation of such a modified polymer.

Examples of the polyfunctional modifying agent include, but not limited to the following, polyglycidyl ethers of polyhydric alcohols, such as ethylene glycol diglycidyl ether and glycerin triglycidyl ether; polyglycidyl ethers of aromatic compounds having two or more phenyl groups, such as diglycidylated bisphenol A; polyepoxy compounds such as 1,4-diglycidyl benzene, 1,3,5-triglycidyl benzene, and polyepoxidized liquid polybutadiene; epoxy group-containing tert-amines such as 4,4'-diglycidyl-diphenylmethylamine and 4,4'-diglycidyl-dibenzylmethylamine, glycidylamino compounds

such as diglycidylaniline, diglycidyl-o-toluidine, tetraglycidyl-m-xylenediamine, tetraglycidylaminodiphenylmethane, tetraglycidyl-p-phenylenediamine, diglycidylaminomethylcyclohexane, and tetraglycidyl-1,3-bisaminomethylcyclohexane; and compounds each having an epoxy group and other functional group, such as 3-glycidoxypropyltrimethoxysilane, 3-glycidoxypropyltriethoxysilane, 3-glycidoxypropyltributoxysilane, epoxy-modified silicone, epoxidized soybean oil, and epoxidized linseed oil.

Examples of the nitrogen atom-free coupling agent include, but not limited to the following, alkoxysilane compounds such as tetramethoxysilane, tetraethoxysilane, tetrabutoxysilane, and alkyl triphenoxysilane; halogenated silane compounds such as silicon tetrachloride, silicon tetrabromide, silicon tetraiodide, monomethyltrichlorosilicon, monoethyltrichlorosilicon, monobutyltrichlorosilicon, monohexyltrichlorosilicon, monomethyltribromosilicon, and bistrichlorosilylethane; and alkoxy halogenated silane compounds such as monochlorotrimethoxysilane, monobromotrimethoxysilane, dichlorodimethoxysilane, dibromodimethoxysilane, trichloromethoxysilane, and tribromomethoxysilane.

Examples of the nitrogen atom-free coupling agent include tin halide compounds such as tin tetrachloride, tin tetrabromide, monomethyltrichlorotin, monoethyltrichlorotin, monobutyltrichlorotin, monophenyltrichlorotin, and bistrichlorostanylethane; polyhalogenated phosphorus compounds such as trichlorophosphine and tribromophosphine; phosphorus acid ester compounds such as trisnonylphenyl phosphite, trimethyl phosphite, and triethyl phosphite; and phosphoric acid ester compounds such as trimethyl phosphate and triethyl phosphate.

An end modifying agent may also be used as the modifying agent which modifies the hydrogenated conjugated diene-based polymer (rubber-like polymer 1) included in the crosslinked rubber composition of the present embodiment. Examples of the end modifying agent include, but not limited to the following, 1,3-diethyl-2-imidazolinone, 1,3-dimethyl-2-imidazolinone, 1,3-dipropyl-2-imidazolinone, 1-methyl-3-ethyl-2-imidazolinone, 1-methyl-3-propyl-2-imidazolinone, 1-methyl-3-butyl-2-imidazolinone, and 1,3-dihydro-1,3-dimethyl-2H-imidazol-2-one.

(Iodine value of rubber component (A))

The iodine value of the rubber component (A) used in the crosslinked rubber composition of the present embodiment is 370 or less, preferably 350 or less, more preferably 300 or less, further preferably 250 or less, still more preferably 200 or less from the viewpoint of heat resistance and ozone resistance of the crosslinked rubber composition of the present embodiment.

As described below, even in a case where the iodine value of the hydrogenated conjugated diene-based polymer (rubber-like polymer 1) is controlled, the iodine value of the entire rubber component (A) can be increased and then heat resistance of the crosslinked rubber composition can be affected in the case of combination use with other rubber component high in degree of unsaturation (high iodine value). Thus, the iodine value of not only the hydrogenated conjugated diene-based polymer (rubber-like polymer 1), but also the entire rubber component (A) is controlled within a certain range in the present embodiment.

The iodine value of the rubber composition (A) is 10 or more, preferably 20 or more, more preferably 30 or more from the viewpoint of ease of crosslinking of the rubber component (A).

The iodine value can be measured by the method described in "JIS K 0070:1992".

The iodine value is a value representing the amount of halogen which reacts with 100 g of an objective substance, the amount being converted into the number of grams, and thus the unit of the iodine value is "I g/100 g".

The iodine value of the rubber component (A) can be controlled by adjustment of the respective iodine values of the hydrogenated conjugated diene-based polymer as a constituent rubber component, and other rubber, and the compositional ratio therebetween.

The conjugated diene monomer has a double bond. Thus, in a case where, for example, the conjugated diene monomer and a vinyl aromatic monomer are copolymerized to produce the hydrogenated conjugated diene-based polymer (rubber-like polymer 1) in a method for producing the hydrogenated conjugated diene-based polymer, described below, the iodine value of the rubber component (A) is lower at a lower content of the conjugated diene monomer in the polymer and also lower at a higher degree of hydrogenation.

The iodine value of the hydrogenated conjugated diene-based polymer can be controlled by adjustment of polymerization conditions of an unsaturated bond-containing conjugated diene monomer or the like, for example, the amount of addition, the polymerization time and the polymerization temperature, and conditions in the hydrogenation step, for example, the amount of addition of hydrogen and the hydrogenation time.

The iodine value of the hydrogenated conjugated diene-based polymer (rubber-like polymer 1) included in the rubber component (A) is preferably 300 or less, more preferably 250 or less, further preferably 200 or less from the viewpoint of heat resistance and ozone resistance of the crosslinked rubber composition of the present embodiment. The iodine value is preferably 1 or more, more preferably 5 or more, further preferably 10 or more from the viewpoint of crosslinking ability of the rubber component (A).

In a case where a rubber-like polymer 2 other than the hydrogenated conjugated diene-based polymer (rubber-like polymer 1) is included in the rubber component (A), the iodine value of the rubber-like polymer 2 other than the

hydrogenated conjugated diene-based polymer depends on the type of rubber described below, and is, for example, 470 in the case of polybutadiene or 373 in the case of polyisoprene, and in a case where a rubber component large in iodine value is selected as the rubber-like polymer 2, the iodine value of the entire rubber component (A) is controlled within 10 or more and 370 or less by adjustment of the ratio of the hydrogenated conjugated diene-based polymer as the rubber-like polymer 1, decrease of the iodine value of the hydrogenated conjugated diene-based polymer as the rubber-like polymer 1, and/or further addition of other rubber component having a smaller iodine value.

(Rubber-like polymer 2 other than hydrogenated conjugated diene-based polymer (rubber-like polymer 1))

The rubber component (A) used in the crosslinked rubber composition of the present embodiment may include the rubber-like polymer 2 other than the hydrogenated conjugated diene-based polymer (rubber-like polymer 1).

The rubber-like polymer 2 other than the hydrogenated conjugated diene-based polymer is preferably a rubber-like polymer having a glass transition temperature of -120°C or more and 0°C or less and a Mooney viscosity at 100°C of 20 or more and 180 or less.

Examples of the rubber-like polymer 2 other than the hydrogenated conjugated diene-based polymer (rubber-like polymer 1) include, but not limited to the following, at least one rubber-like polymer selected from the group consisting of styrene-butadiene rubber, styrene-isoprene rubber, natural rubber, polybutadiene, polyisoprene rubber, ethylene-propylene-diene rubber, ethylene-propylene rubber, butyl rubber, polyurethane, epichlorohydrin rubber, silicone rubber, acrylic rubber, nitrile rubber, chloroprene rubber, and fluororubber.

The polybutadiene encompasses low cis-polybutadiene, high cis-polybutadiene, and high trans-polybutadiene, the styrene-butadiene rubber encompasses styrene-butadiene-copolymerized rubber by solution polymerization and styrene-butadiene-copolymerized rubber by emulsion polymerization, and the butyl rubber encompasses butyl chloride rubber and butyl bromide rubber.

The type of the rubber-like polymer 2 can be here selected depending on the intended use and required physical properties of the crosslinked rubber composition of the present embodiment.

For example, preferably, natural rubber is selected for improvements in mechanical properties including tensile strength of the crosslinked rubber composition of the present embodiment, polybutadiene is selected for improvements in wear resistance and low temperature characteristics thereof, and ethylene-propylene-diene rubber is selected for an improvement in weather resistance thereof.

Examples of the natural rubber preferably include, but not limited to the following, RSS Nos. 3 to 5 being smoked sheets, SMR, and epoxidized natural rubber because these are often high-molecular-weight components and are excellent in tensile strength.

The rubber component (A) preferably includes only the hydrogenated conjugated diene-based polymer (rubber-like polymer 1) and the rubber-like polymer 2 having the predetermined glass transition temperature and Mooney viscosity, from the viewpoint of the glass transition temperature control and cold resistance of the crosslinked rubber composition of the present embodiment, and may further include other rubber component and/or polymer. For example, chloroprene rubber, a styrene-butadiene-styrene block copolymer, and/or a styrene-isoprene-styrene block copolymer may be included.

The glass transition temperature and the Mooney viscosity of the rubber-like polymer 2 other than the hydrogenated conjugated diene-based polymer (rubber-like polymer 1) are preferably -60 to 0°C and preferably 40 to 110, respectively.

The content of the rubber-like polymer 2 other than the hydrogenated conjugated diene-based polymer (rubber-like polymer 1) in the rubber component (A) is preferably 10% by mass or more, more preferably 20% by mass or more, more preferably 30% by mass or more from the viewpoint of crosslinking ability of the rubber component (A) and economic performance due to use of a general-purpose material.

On the other hand, the content is preferably 90% by mass or less, more preferably 80% by mass or less, further preferably 75% by mass or less from the viewpoint of heat resistance and compression set of the crosslinked rubber composition of the present embodiment.

The types of the hydrogenated conjugated diene-based polymer (rubber-like polymer 1) and other rubber-like polymer 2, and the blending ratio therebetween are not particularly limited, and can be selected from the following viewpoint.

For example, a case where other rubber-like polymer 2 is rubber having 10% by mass or more of a double bond or having an iodine value of 50 (I g/100 g), for example, styrene-butadiene rubber, styrene-isoprene rubber, natural rubber, polybutadiene, or polyisoprene rubber is preferable from the viewpoint of productivity because the viscosity in processing during preparation of the crosslinked rubber composition of the present embodiment tends to be lower and the crosslinking speed in formation of the crosslinked rubber composition of the present embodiment tends to be higher.

The ratio between the hydrogenated conjugated diene-based polymer (rubber-like polymer 1) and other rubber-like polymer 2, rubber-like polymer 1 : rubber-like polymer 2, is preferably 10:90 to 60:40, more preferably 15:85 to 50:50,

further preferably 20:80 to 40:60.

On the other hand, in a case where the rubber-like polymer 2 is rubber having less than 10% of a double bond or having an iodine value of less than 50 (I g/100 g), for example, ethylene-propylene-diene rubber, ethylene-propylene rubber, or butyl rubber, the crosslinked rubber composition of the present embodiment tends to be excellent in suppression of degradation under an acidic or basic condition. The ratio between the rubber-like polymer 1 and the rubber-like polymer 2, rubber-like polymer 1 : rubber-like polymer 2, is preferably 100:0 to 20:80, more preferably 80:20 to 20:80, further preferably 70:30 to 30:70, from the viewpoint of no high losses in heat resistance and ozone resistance of the crosslinked rubber composition of the present embodiment and enhancements in vibration isolation characteristics of the crosslinked rubber composition.

The Mooney stress relaxation (MSR) of the rubber-like polymer 2 other than the hydrogenated conjugated diene-based polymer (rubber-like polymer 1) is preferably 0.9 or less, more preferably 0.85 or less, further preferably 0.80 or less, still more preferably 0.75 or less from the viewpoint of suppression of cold flowability of the rubber-like polymer 2 and an enhancement in modulus of the crosslinked rubber composition of the present embodiment. The lower limit is not particularly limited and is preferably 0.10 or more from the viewpoint of processability during preparation of the crosslinked rubber composition of the present embodiment.

It is indicated that, as the ratio between the Mooney stress relaxation at 100°C of the hydrogenated conjugated diene-based polymer (rubber-like polymer 1) and that of the rubber-like polymer 2, namely, (Value of Mooney stress relaxation of hydrogenated conjugated diene-based polymer (rubber-like polymer 1))/(Value of Mooney stress relaxation of rubber-like polymer 2) is lower, molecular chains of the hydrogenated conjugated diene-based polymer (rubber-like polymer 1) are more highly entangled than those of the rubber-like polymer 2. The value of the stress relaxation ratio is preferably 0.1 or more and less than 1.0, more preferably 0.15 or more and 0.9 or less, further preferably 0.2 or more and 0.85 or less from the viewpoint of an enhancement in reinforcement effect of the crosslinked rubber composition of the present embodiment.

(Change in shore A hardness after heating compared with that before the heating, of crosslinked rubber composition)

The shore A hardness of the crosslinked rubber composition of the present embodiment is a durometer hardness according to JIS K6253-3 and is a value measured according to Type A.

The shore A hardness of the crosslinked rubber composition of the present embodiment is preferably 40 or more and 80 or less (A40° or more and A80° or less), more preferably 45 or more and 75 or less (A45° or more and A75° or less), further preferably 48 or more and 73 or less (A48° or more and A73° or less) from the viewpoint of mechanical properties and strength.

The change in shore A hardness after heating under air at 100°C for 72 hours compared with that before the heating, of the crosslinked rubber composition of the present embodiment, satisfies the following expression (1). In the following expression, only the value of the difference in numerical values is represented.

$$-10 < \text{(Shore A hardness after heating)} - \text{(Shore A hardness before heating)} < 5 \qquad (1)$$

The upper limit value in the expression (1) is less than 5, preferably 4 or less, more preferably 3 or less. A change in shore A hardness of less than 5 indicates that the amount of the remaining crosslinker in crosslinking reaction is decreased to an amount having no problems in practical use or that the remaining double bond is small to result in a small increase in crosslinking point due to thermal reaction, and thus is preferable because suppression of an increase in hardness of the crosslinked rubber composition of the present embodiment over time can be expected.

A case where the value in the expression (1) is more than the upper limit value and the hardness after heating is further increased indicates that such heating increases the crosslinking point in the crosslinked rubber composition to result in curing of the crosslinked rubber composition, and the balance between physical properties is changed, for example, an increase in tensile strength, but a reduction in tensile elongation occurs, resulting in a tendency not to allow for continuous use under physical properties initially designed.

The lower limit value in the expression (1) is more than -10, preferably -8 or more, more preferably -7 or more, further preferably -6 or more, still more preferably -5 or more. A change in shore A hardness after heating compared with that before the heating of more than -10 indicates that cleavage of a polymer chain and/or a decrease in crosslinking point, such as reversion, can be suppressed, and thus is preferable because suppression of a reduction in hardness of the crosslinked rubber composition of the present embodiment over time can be expected.

A case where the value in the expression (1) is less than the lower limit value and the hardness after heating is further reduced indicates that the hardness is reduced by the occurrence of, for example, a phenomenon of cleavage of a main polymer chain in the crosslinked rubber composition due to such heating, and the balance between physical properties is changed, for example, an enhancement in tensile elongation, but a reduction in tensile strength occurs,

resulting in a tendency not to allow for continuous use under physical properties initially designed.

The change in shore A hardness after heating compared with that before the heating satisfies the range of the expression (1), thereby allowing for exertion of the effects of sufficient heat resistance exhibited and less degradation over time in the case of use of the crosslinked rubber composition of the present embodiment as a material for members to which heat is to be applied in use, such as an engine mount for automobiles.

Examples of the method for obtaining the crosslinked rubber composition satisfying the expression (1) include a method including decreasing the remaining crosslinker in the crosslinked rubber composition, a method including controlling the kneading temperature and the crosslinking temperature in order to inhibit the rubber component(s) from being decomposed, gelled, and/or the like due to radical generation during kneading and crosslinking, and a method including adding an anti-aging agent.

The remaining amount of the crosslinker in the crosslinked rubber composition is preferably 0.3% by mass or less, more preferably 0.1% by mass or less, further preferably 0.05% by mass or less.

The value of the expression (1) can also be affected by selection of the type of rubber used in the crosslinked rubber composition. For example, while natural rubber tends to be cleaved in a main chain thereof to result in a reduction in hardness of the crosslinked rubber composition if radical is present, butadiene rubber tends to be preferentially crosslinked to result in an increase in hardness of the crosslinked rubber composition if radical is present. The hydrogenated conjugated diene-based polymer (rubber-like polymer 1), although hardly undergoes both the above reactions, tends to be gelled to result in an increase in hardness of the crosslinked rubber composition, and thus the rubber-like polymer 1 can be combined with natural rubber to result in a tendency to decrease the variation range in hardness of the crosslinked rubber composition.

The maximum temperature of the kneading temperature during kneading of the rubber component (A) and an additive is preferably 150°C or less, more preferably 145°C or less, further preferably 140°C or less. On the other hand, such kneading is preferably made at 110°C or more in order to uniformly disperse the rubber component (A) and an additive.

The crosslinking temperature is preferably 140°C or more and 175°C or less, more preferably 150°C or more and 175°C, further preferably 155°C or more and 175°C or less.

If the value of (Shore A hardness after heating) - (Shore A hardness before heating) of the crosslinked rubber composition of the present embodiment is 5 or more, examples of the method for controlling the value to less than 5 include a method including using a hydrogenated conjugated diene-based polymer having an iodine value of 100 or less, preferably 50 or less, a method including combination use of 10 parts by mass or more of natural rubber based on 100 parts by mass of the hydrogenated conjugated diene-based polymer, and a method including raising the crosslinking temperature by about 5°C or elongating the crosslinking time by about 10 minutes in formation of the crosslinked rubber composition, thereby decreasing the remaining amount of the crosslinker in the crosslinked rubber composition, to 0.1% by mass or less.

On the other hand, if the value of (Shore A hardness after heating) - (Shore A hardness before heating) is -10 or less, examples of a preferable method for controlling the value to more than -10 include a method including decreasing the amount of use of natural rubber and increasing the ratios of use of the hydrogenated conjugated diene-based polymer and the polybutadiene rubber, and a method including using a hydrogenated conjugated diene-based polymer having an iodine value of 30 or more and 200 or less.

Furthermore, a case where other rubber component than the above hydrogenated conjugated diene-based polymer (rubber-like polymer 1) is used in the rubber component (A) is superior from the viewpoint of heat resistance because a crosslinked rubber composition less in macro separation is obtained by selection of a rubber component highly compatible with the hydrogenated conjugated diene-based polymer (rubber-like polymer 1). Excellent compatibility means the solubility parameter (SP value) of the hydrogenated conjugated diene-based polymer (rubber-like polymer 1) and the SP value of other rubber component than the rubber-like polymer 1 are close to each other, and the absolute value of the difference between these SP values is preferably 0.8 or less, more preferably 0.5 or less, further preferably 0.3 or less.

For example, the following method can be used as the method for calculating the SP values of the rubber-like polymer 1 and such other rubber component. In other words, first, the molar volume and the cohesive energy of each vinyl polymer are calculated by methods described in Bicerano (Reference: J. Bicerano, Prediction of Polymer Properties, 3rd, MarcelDekker, 2002). The cohesive energy here adopted is a value calculated according to the Van Krevelen method.

Next, the SP values of the rubber-like polymer 1 and such other rubber component can be determined by methods shown in Expressions 17.8 to 17.10 in p. 615 in Jozef. Bicerano: PREDICTION OF POLYMER PROPERTIES, Marcel Dekker, AMERICA (2002). Herein, crystallinity, and a microphase-separated structure of a block copolymer or the like are ignored.

The Cohesive energy E (J/mol)/Molar volume V ($10^{-6}$ $m^3$/mol) of each vinyl polymer is exemplified below.

polystyrene: 36932/97.0, 1,2-polybutadiene: 16450/58.3, 1,4-polybutadiene: 18579/59.1, 1,2-polybutylene: 17527/65.6, hydrogenated 1,4-polybutadiene: 18146/64.4, 1,4-polyisoprene: 22644/76.6, 1,2-polyisoprene: 19407/75.3,

3,4-polyisoprene: 20908/82.2, polyethylene: 9073/32.2.

For example, the method for calculating the SP value of a conjugated diene-based polymer of styrene/1,4-butadiene at equal moles is shown below.

$$E = 36932 \times 0.5 + 18579 \times 0.5 = 27755 \text{ (J/mol)}$$

$$V = 97.0 \times 0.5 + 59.1 \times 0.5 = 78.1 \text{ (m}^3\text{/mol)}$$

$$\text{SP value} = (27755/78.1)^{1/2} = 18.6 \text{ ((J/cm}^3)^{1/2})$$

(Flexibility of crosslinked rubber composition under low-temperature condition)

The flexibility of the crosslinked rubber composition of the present embodiment under a low-temperature condition can be determined by measuring the viscoelasticity parameter of the crosslinked rubber composition, determining the ratio between the storage elastic modulus at -100°C and the storage elastic modulus at -20°C, and defining the ratio as the index of the flexibility under a low-temperature condition.

The storage elastic modulus can be measured in a torsional mode with a viscoelasticity tester "ARES" manufactured by Rheometric Scientific, Inc., according to JIS K 6394, by use of a crosslinked rubber composition sheet having a thickness of 3 mm.

The ratio, $(G'_{(-20°C)}/G'_{(-100°C)}) \times 100$, of the storage elastic modulus $(G'_{(-20°C)})$ measured at -20°C, a frequency of 10 Hz and a strain of 1% to the storage elastic modulus $(G'_{(-100°C)})$ measured at -100°C, a frequency of 10 Hz and a strain of 1% is calculated.

The $(G'_{(-20°C)}/G'_{(-100°C)}) \times 100$ is preferably 1.5 or less, more preferably 1.0 or less from the viewpoint of flexibility in use under a low-temperature condition.

The use "under a low-temperature condition" is supposed to be use under a temperature condition of about -20°C. The value of $(G'_{(-20°C)}/G'_{(-100°C)}) \times 100$ has the denominator representing the storage elastic modulus of a hard glass form of the crosslinked rubber composition, whereas has the numerator representing that of the form of the crosslinked rubber composition at -20°C, namely, is the value of the storage elastic modulus reflecting whether a rubber-like soft form or a glass-like hard form is taken, and thus a large value of $(G'_{(-20°C)}/G'_{(-100°C)}) \times 100$ can be determined to indicate a sufficient reduction in storage elastic modulus at -20°C and usability as a material having flexibility.

The value of $(G'_{(-20°C)}/G'_{(-100°c)}) \times 100$, while is highly affected by the glass transition temperature of the hydrogenated conjugated diene-based polymer used in the crosslinked rubber composition of the present embodiment, also depends on not only the content and the dispersion state of the carbon black (B) described below, but also various conditions, for example, the type and the amount of addition of an additive such as oil. Therefore, it is preferable for control of the value of $(G'_{(-20°C)}/G'_{(-100°C)})$ to adjust and then set various conditions described above so that the glass transition temperature of the crosslinked rubber composition is - 20°C or less.

In order that the value of $(G'_{(-20°C)}/G'_{(-100°C)}) \times 100$ falls within the above suitable numerical value range, preferably, the glass transition temperature of the hydrogenated conjugated diene-based polymer used in the crosslinked rubber composition of the present embodiment is lowered, the glass transition temperature of the crosslinked rubber composition is lowered and the content of a filler containing the carbon black (B) is 10 parts by mass or more and 120 parts by mass or less, more preferably 10 parts by mass or more and 100 parts by mass or less based on 100 parts by mass of the rubber component (A). In the case of addition of 30 parts by mass or more of the filler based on 100 parts by mass of the rubber component (A), the glass transition temperature of the hydrogenated conjugated diene-based polymer is preferably -40°C or less. Furthermore, in the case of addition of 50 parts by mass or more of the filler based on 100 parts by mass of the rubber component (A), the glass transition temperature of the hydrogenated conjugated diene-based polymer is more preferably -50°C or less. If the content of the entire filler containing the carbon black is more than 120 parts by mass in total based on 100 parts by mass of the rubber component (A), even the storage elastic modulus at -20°C of the crosslinked rubber composition is sometimes increased. If the amount of addition of the filler is increased, the filler is preferably highly dispersed. For example, it is effective to use a hydrogenated conjugated diene-based polymer containing a modifying group interacting with the carbon black, and/or enhance dispersibility by the temperature and the kneading system in kneading.

(Method for producing hydrogenated conjugated diene-based polymer (rubber-like polymer 1))

Hereinafter, the method for producing the hydrogenated conjugated diene-based polymer (rubber-like polymer

1) constituting the rubber component (A) used in the crosslinked rubber composition of the present embodiment is described.

The value expressed by "part(s) by mass" is a value under the assumption that the total amount of the rubber component (A) is 100 parts by mass, unless particularly noted.

The methods for identifying the type and the content ratio of the rubber component included in the crosslinked rubber composition of the present embodiment are not particularly limited, and, for example, NMR can be used. For example, the published document (JSR TECHNICAL REVIEW No. 126/2019) has disclosed a method for quantitatively calculating the ratio among a styrene unit, a 1,2-vinyl bond, a 1,4-vinyl bond, a 1,4-cis bond and an isoprene unit contained in a conjugated diene-based polymer composition with solid $^{13}$C-C-NMR, and such a method can also be used for identification of the rubber component in the crosslinked rubber composition of the present embodiment.

<Method for forming hydrogenated conjugated diene-based polymer (rubber-like polymer 1) by polymerization and hydrogenation>

The hydrogenated conjugated diene-based polymer (rubber-like polymer 1) constituting the rubber component (A) can be produced by polymerizing the conjugated diene monomer, if necessary, copolymerizing the aromatic vinyl monomer, and then adding a hydrogenation catalyst to perform hydrogenation.

In a case where the hydrogenated conjugated diene-based polymer is a copolymer of the conjugated diene monomer and the aromatic vinyl monomer, the copolymer is preferably a random copolymer.

The hydrogenated conjugated diene-based polymer is preferably one obtained by at least polymerizing the conjugated diene monomer, or copolymerizing the conjugated diene monomer and other monomer, and hydrogenating some or most double bonds, from the viewpoint of production cost, vibration isolation characteristics, heat resistance, and ozone resistance.

The method including polymerizing or copolymerizing and then hydrogenating the conjugated diene monomer, which is here applied, is preferably a method including polymerization of the conjugated diene monomer or, if necessary, copolymerization thereof with other monomer according to anionic polymerization with various additives and conditions, and then hydrogenation of the resultant, as described in International Publication No. WO96/05250, Japanese Patent Laid-Open No. 2000-053706, International Publication No. WO2003/085010, International Publication No. WO2019/151126, International Publication No. WO2019/151127, International Publication No. WO2002/002663, or International Publication No. WO2015/006179.

<Titanium in hydrogenated conjugated diene-based polymer (rubber-like polymer 1)>

The hydrogenated conjugated diene-based polymer (rubber-like polymer 1) constituting the rubber component (A) may contain titanium.

Titanium in the hydrogenated conjugated diene-based polymer is preferably a catalyst residue in production of the hydrogenated conjugated diene-based polymer.

In such a case, titanium as a catalyst is preferably a hydrogenation catalyst component.

Preferred examples of the hydrogenation catalyst component include any Ti compound described in Japanese Patent Laid-Open No. H1-275605, Japanese Patent Laid-Open No. H2-172537, Japanese Patent Laid-Open No. H4-96904, Japanese Patent Laid-Open No. H8-33846, Japanese Patent Laid-Open No. H8-41081, International Publication No. WO2014/046016, International Publication No. WO2014/046017, International Publication No. WO2014/065283, International Publication No. WO2017/090714, and International Publication No. WO2017/090714, from the viewpoint of easy adjustment of the amount of metal in the hydrogenated conjugated diene-based polymer to a predetermined amount.

The hydrogenation catalyst component is more preferably a mixture or a reaction product of a Ti compound with a Li compound and/or a Mg compound. Further preferred is a mixture or a reaction product of a Ti compound with a Li compound from the viewpoint of the speed of hydrogenation.

Examples of the Ti compound include titanocene of the following formula (I).

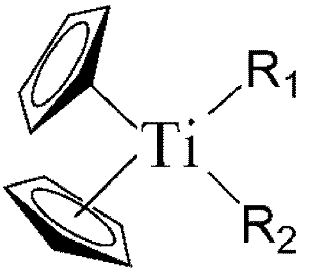

(1)

In the formula (I), $R_1$ and $R_2$ each represent a group selected from the group consisting of a C1 to C12 hydrocarbon group, an aryloxy group, an alkoxyl group, a halogen group, and a carbonyl group, and $R_1$ and $R_2$ may be the same as or different from each other.

Preferred examples of the Ti compound include, but not limited to the following, bis(η5-cyclopentadienyl)titanium di(p-tolyl), bis(η5-cyclopentadienyl)titanium di(phenyl), bis(η5-cyclopentadienyl)titanium di(3,4-xylyl), bis(η5-cyclopentadienyl)titanium (furfuryloxy)chloride, and bis(η5-cyclopentadienyl)titanium dichloride, from the viewpoint of a high speed of hydrogenation.

More preferred is bis(η5-cyclopentadienyl)titanium dichloride from the viewpoint of economic performance.

Examples of the Li compound include, but not limited to the following, methyllithium, ethyllithium, n-propyllithium, isopropyllithium, n-butyllithium, sec-butyllithium, isobutyllithium, t-butyllithium, n-pentyllithium, n-hexyllithium, phenyllithium, cyclopentadienyllithium, m-tolyllithium, p-tolyllithium, xylyllithium, dimethylaminolithium, diethylaminolithium, methoxylithium, ethoxylithium, n-propoxylithium, isopropoxylithium, n-butoxylithium, sec-butoxylithium, t-butoxylithium, pentyloxylithium, hexyloxylithium, heptyloxylithium, octyloxylithium, phenoxylithium, 4-methylphenoxylithium, benzyloxylithium, and 4-methylbenzyloxylithium.

Examples of the Mg compound include, but not limited to the following, dimethylmagnesium, diethylmagnesium, dibutylmagnesium, ethylbutylmagnesium, methylmagnesium bromide, methylmagnesium chloride, ethylmagnesium bromide, ethylmagnesium chloride, phenylmagnesium bromide, phenylmagnesium chloride, t-butylmagnesium chloride, and t-butylmagnesium bromide.

<Contents of titanium and aluminum in hydrogenated conjugated diene-based polymer>

The amount of titanium added as the hydrogenation catalyst component in production of the hydrogenated conjugated diene-based polymer (rubber-like polymer 1) is preferably 150 ppm or less relative to a conjugated diene-based polymer before hydrogenation.

The content of titanium in the hydrogenated conjugated diene-based polymer (rubber-like polymer 1) used in the crosslinked rubber composition of the present embodiment is preferably 1 ppm or more and 100 ppm or less, more preferably 5 ppm or more and 90 ppm or less, further preferably 10 ppm or more and 80 ppm or less. A content of titanium of 100 ppm or less can allow for prevention of yellowing of the hydrogenated conjugated diene-based polymer, and a content of titanium of 1 ppm or more eliminates the need for removal facilities of titanium and can reduce the cost.

The content of aluminum added in production of the hydrogenated conjugated diene-based polymer (rubber-like polymer 1) is preferably 6 ppm or less.

The aluminum content of the hydrogenated conjugated diene-based polymer (rubber-like polymer 1) used in the crosslinked rubber composition of the present embodiment is preferably 2 ppm or less, further preferably 1 ppm or less, and no aluminum is further preferably contained, in consideration of a reduction in safety of the catalyst in hydrogenation reaction. Not aluminum, but lithium and/or magnesium can be utilized, and thus the function of aluminum as a co-catalyst can be compensated.

The hydrogenation catalyst added in production of the hydrogenated conjugated diene-based polymer preferably contains aluminum at a content of 0.05 mol or less, more preferably aluminum at a content of 0.04 mol or less, further preferably aluminum at a content of 0.03 mol or less, per mol of titanium, still more preferably contains no aluminum, from the viewpoint of suppression of an increase in Mooney viscosity (ML viscosity) of the hydrogenated conjugated diene-based polymer, and handleability/safety of the hydrogenation catalyst.

The titanium content and the aluminum content of the hydrogenated conjugated diene-based polymer can be controlled within the above numerical value ranges by adjustment of the titanium content and the aluminum content of the hydrogenation catalyst.

<Amount of metal than Al and Ti in crosslinked rubber composition>

The crosslinked rubber composition of the present embodiment may contain other metal than Al and Ti described

above.

Examples of other metal than aluminum and titanium include lithium.

The content of lithium in the crosslinked rubber composition of the present embodiment is preferably 60 ppm or less, more preferably 50 ppm or less, further preferably 40 ppm or less, still more preferably 30 ppm or less from the viewpoint of suppression of degradation over time of the crosslinked rubber composition of the present embodiment. On the other hand, the content is preferably 2 ppm or more, more preferably 5 ppm or more, further preferably 10 ppm or more from the viewpoint of tensile elongation in crosslinking.

It is noted that the contents of titanium, aluminum and other metal such as lithium described above are the amounts of respective elements even if such metals are contained as compounds.

<Dispersion state of titanium in crosslinked rubber composition>

When titanium in the hydrogenated conjugated diene-based polymer (rubber-like polymer 1) is any residue of the hydrogenation catalyst component or polymerization catalyst component, titanium can be finely dispersed in the crosslinked rubber composition of the present embodiment and be formed into a compound or composite which is difficult to specify, thereby having a large influence on physical properties of the crosslinked rubber composition. Accordingly, titanium is preferably dispersed as a particulate form in the hydrogenated conjugated diene-based polymer (rubber-like polymer 1) in order to have no influence on physical properties of the crosslinked rubber composition and also impart no complicated properties, and furthermore alleviate adhesion of the crosslinked rubber composition to a mold.

<Addition of additive>

A deactivator, a neutralizer, and/or the like may also be, if necessary, added at the final stage of the polymerization step in the production process of the hydrogenated conjugated diene-based polymer (rubber-like polymer 1).

Examples of the deactivator include, but not limited to the following, water; and alcohols such as methanol, ethanol, and isopropanol. The final stage in the polymerization step herein refers to a state where 95% or more of a monomer added is consumed in polymerization.

Examples of the neutralizer include, but not limited to the following, carboxylic acids such as stearic acid, oleic acid, and versatic acid (mixture of carboxylic acids having 9 to 11 carbon atoms, mainly having 10 carbon atoms, and having many branches); aqueous inorganic acid solutions, and carbon dioxide.

A stabilizer for rubber is preferably added at the final stage of the polymerization step in the production process of the hydrogenated conjugated diene-based polymer (rubber-like polymer 1), from the viewpoint of prevention of gel formation and processing stability.

The stabilizer for rubber is not limited to the following and any known stabilizer can be used, and preferred examples thereof include antioxidants such as 2,6-di-tert-butyl-4-hydroxytoluene (hereinafter, also designated as "BHT".), n-octadecyl-3-(4'-hydroxy-3',5'-di-tert-butylphenol)propionate, and 2-methyl-4,6-bis[(octylthio)methyl]phenol.

A softener for rubber can be, if necessary, added at the final stage of the polymerization step in the production process of the hydrogenated conjugated diene-based polymer (rubber-like polymer 1), in order to improve productivity and processability of the polymer.

Examples of the softener for rubber include, but not limited to the following, spreading oil, liquid rubber, and a resin. Spreading oil is preferable from the viewpoint of processability, productivity, and economic performance.

The method for adding the softener for rubber to the hydrogenated conjugated diene-based polymer (rubber-like polymer 1) is, but not limited to the following, preferably a method including adding and mixing the softener for rubber to and with a polymer solution, to provide a polymer solution containing the softener for rubber, and performing solvent removal from the polymer solution.

Examples of the spreading oil include aromatic oil, naphthene oil, and paraffin oil. In particular, alternative oil to aromatic oil is preferable, which contains 3% by mass or less of a polycyclic aromatic (PCA) component according to the IP346 method, from the viewpoint of environment safety and from the viewpoint of oil bleed prevention and wet grip properties. Examples of the alternative oil to aromatic oil include not only TDAE (Treated Distillate Aromatic Extracts) and MES (Mild Extraction Solvate) shown in Kautschuk Gummi Kunststoffe 52 (12) 799 (1999), but also RAE (Residual Aromatic Extracts).

The crosslinked rubber composition of the present embodiment and/or a rubber composition before crosslinking may include spreading oil, and the content of the spreading oil is preferably 30% by mass or less, more preferably 20% by mass or less, further preferably 10% by mass or less, still more preferably 5% by mass or less from the viewpoint of prevention of degradation over time of the crosslinked rubber composition formed.

Examples of the resin include, but not limited to the following, aromatic petroleum resins, coumarone-indene resins, terpene-based resins, rosin derivatives (including wood oil resins), tall oil, tall oil derivatives, rosin ester resins, natural and synthetic terpene resins, aliphatic hydrocarbon resins, aromatic hydrocarbon resins, mixed aliphatic-aromatic

hydrocarbon resins, coumarin-indene resins, phenol resins, p-tertbutylphenol-acetylene resins, phenol-formaldehyde resins, xylene-formaldehyde resins, monoolefin oligomers, diolefin oligomers, hydrogenated aromatic hydrocarbon resins, cyclic aliphatic hydrocarbon resins, hydrogenated hydrocarbon resins, hydrocarbon resins, hydrogenated wood oil resins, hydrogenated oil resins, and esters of hydrogenated oil resins and monofunctional or multifunctional alcohols.

These resins may be used singly or in combinations of two or more kinds thereof. In a case where the resin used is a hydrogenated resin, all unsaturated groups may be hydrogenated, or some unsaturated groups may remain and the rest may be hydrogenated.

The effect by addition of the resin tends to provide not only an improvement in processability of a rubber composition obtained by blending the conjugated diene-based polymer with the filler or the like, but also an improvement in tensile strength of a vulcanized product formed.

The amount of addition of the spreading oil, liquid rubber, resin or the like as the softener for rubber is preferably 5 parts by mass or more, more preferably 10 parts by mass or more, further preferably 20 parts by mass or more based on 100 parts by mass of the total amount of the rubber component (A) including the hydrogenated conjugated diene-based polymer and other rubber component. The amount of addition falls within the range to result in a tendency to provide excellent wear resistance and cracking resistance. The amount is preferably 35 parts by mass or less, more preferably 30 parts by mass or less, further preferably 25 parts by mass or less from the viewpoint of an enhancement in low fuel consumption.

<Acquirement of hydrogenated conjugated diene-based polymer (rubber-like polymer 1)>

A known method can be used as the method for acquiring the hydrogenated conjugated diene-based polymer (rubber-like polymer 1) from the polymer solution by solvent removal. Examples of the method include a method including separating a solvent by steam stripping or the like, thereafter separating the polymer by filtration, and furthermore performing dewatering and drying to acquire the polymer, a method including concentration in a flushing tank and furthermore devolatilization by a vented extruder or the like, and a method including direct devolatilization by a drum dryer or the like.

(Carbon black (B))

The crosslinked rubber composition of the present embodiment contains 10 parts by mass or more and 120 parts by mass or less of the carbon black (B) based on 100 parts by mass of the rubber component (A).

The carbon black (B) here used can be, but not limited to the following, carbon black in each class, such as SRF, FEF, HAF, ISAF, and SAF. In particular, carbon black having a nitrogen adsorption specific surface area of 50 $m^2/g$ or more and an amount of dibutyl phthalate (DBP) oil absorption of 80 mL/100 g or more is preferable from the viewpoint of extrudability of the crosslinked rubber composition of the present embodiment and from the viewpoint of rolling resistance characteristics.

The content of the carbon black (B) is 10 parts by mass or more, preferably 15 parts by mass or more, more preferably 20 parts by mass or more, further preferably 25 parts by mass or more based on 100 parts by mass of the rubber component (A) from the viewpoint of enhancements in hardness, modulus and wear resistance of the crosslinked rubber composition of the present embodiment. The content of the carbon black (B) is 120 parts by mass or less, preferably 100 parts by mass or less, more preferably 90 parts by mass or less, further preferably 80 parts by mass or less based on 100 parts by mass of the rubber component (A) from the viewpoint of filler dispersibility.

(Silica-based inorganic filler)

The crosslinked rubber composition of the present embodiment may include a silica-based inorganic filler from the viewpoint of low heat generation properties.

The content of the silica-based inorganic filler is preferably 1 part by mass or more and 60 parts by mass or less, more preferably 5 parts by mass or more and 55 parts by mass or less, further preferably 10 parts by mass or more and 50 parts by mass or less based on 100 parts by mass of the rubber component (A).

The silica-based inorganic filler is not particularly limited, known one can be used, a solid particle including $SiO_2$ or $Si_3Al$ as a constituent unit is preferable, and a solid particle including $SiO_2$ or $Si_3Al$ as a main component of a constituent unit is more preferable. The main component herein refers to a component contained in the silica-based inorganic filler at a content of 50% by mass or more, preferably 70% by mass or more, more preferably 80% by mass or more.

Examples of the silica-based inorganic filler include, but not limited to the following, silica, clay, talc, mica, diatomaceous earth, wollastonite, montmorillonite, zeolite, and inorganic fibrous substances such as glass fibers.

Examples of a commercially available product of the silica-based inorganic filler include trade name "Ultrasil

7000GR" manufactured by Evonik Degussa GmbH. The silica-based inorganic filler, which is subjected to surface hydrophobization, or a mixture of the silica-based inorganic filler and an inorganic filler other than the silica-based inorganic filler can also be used. In particular, the silica-based inorganic filler is preferably silica or glass fiber, more preferably silica from the viewpoint of strength and wear resistance of the crosslinked rubber composition of the present embodiment. Examples of the silica include dry silica, wet silica, and synthetic silicate silica.

(Metal oxide and metal hydroxide)

The crosslinked rubber composition of the present embodiment may contain metal oxide and metal hydroxide, in addition to the above carbon black and silica-based inorganic filler.

The metal oxide refers to a solid particle of a constituent unit mainly of chemical formula MxOy (M represents a metal atom, and x and y each independently represent an integer of 1 to 6), and examples thereof include alumina, titanium oxide, magnesium oxide, and zinc oxide. A mixture of the metal oxide and an inorganic filler other than the metal oxide can also be used.

Examples of the metal hydroxide include, but not limited to the following, aluminum hydroxide, magnesium hydroxide, and zirconium hydroxide.

(Silane coupling agent)

The crosslinked rubber composition of the present embodiment and/or a rubber composition before crosslinking may contain a silane coupling agent.

The silane coupling agent has a group having affinity with or being bindable to each of the rubber component (A) including the hydrogenated conjugated diene-based polymer and other rubber component, and the silica-based inorganic filler, and has a function of tightening the interaction between them. A silane coupling agent commonly used is a compound having a sulfur-binding portion, and an alkoxysilyl group and a silanol group portion in one molecule.

Examples of the silane coupling agent include, but not limited to the following, 3-mercaptopropyltrimethoxysilane, 3-mercaptopropylethoxysilane, 2-mercaptoethyltrimethoxysilane, 2-mercaptoethyltriethoxysilane, ethoxy(3-mercaptopropyl)bis(3,6,9,12,15-pentaoxaoctacosan-1-yloxy)silane [manufactured by Evonik Degussa GmbH: Si363], mercapto group-containing silane coupling agents such as NXT-Z30, NXT-Z45, NXTZ60, and NXT silane manufactured by Momentive Performance Materials, bis-[3-(triethoxysilyl)-propyl]-tetrasulfide, bis-[3-(triethoxysilyl)-propyl]-disulfide, bis-[2-(triethoxysilyl)-ethyl]-tetrasulfide, bis(3-triethoxysilylpropyl)trisulfide, bis-[2-(triethoxysilyl)-ethyl]-tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide.

In particular, bis-[3-(triethoxysilyl)-propyl]-disulfide, ethoxy(3-mercaptopropyl)bis(3,6,9,12,15-pentaoxaoctacosan-1-yloxy)silane [manufactured by Evonik Degussa GmbH: Si363], mercapto group-containing silane coupling agents such as NXT-Z30, NXT-Z45, NXTZ60, and NXT silane manufactured by Momentive Performance Materials, and bis-[3-(triethoxysilyl)-propyl]-tetrasulfide are preferable from the viewpoint of a high reinforcement effect.

These silane coupling agents may be used singly or in combinations of two or more kinds thereof.

The content of the silane coupling agent is preferably 2 parts by mass or more and 10 parts by mass or less, more preferably 3 parts by mass or more and 9 parts by mass or less based on 100 parts by mass of the rubber component (A) from the viewpoint that the effect of tightening the interaction between the rubber component (A) and the silica-based inorganic filler is more remarkable. The content is preferably 4 parts by mass or more and 15 parts by mass or less, more preferably 6 parts by mass or more and 12% by mass or less based on 100 parts by mass of the silica-based inorganic filler.

(Dispersibility of filler in crosslinked rubber composition, and storage elastic moduli of crosslinked rubber composition)

The filler mainly of the carbon black (B) in the crosslinked rubber composition of the present embodiment is preferably dispersed to some extent.

The dispersibility of the filler can be figured out by the difference in storage elastic modulus in the variation in strain of the crosslinked rubber composition of the present embodiment under a certain temperature condition by use of a viscoelasticity measurement apparatus. The crosslinked rubber composition of the present embodiment preferably satisfies the following expression (2) from the viewpoint of the dispersibility of the filler.

$$0.5\ \text{MPa} < (\text{Storage elastic modulus at a strain of } 0.1\% \text{ at } 50^\circ\text{C}) - (\text{Storage elastic modulus at a strain of } 10\% \text{ at } 50^\circ\text{C}) < 10\ \text{MPa} \quad (2)$$

The crosslinked rubber composition of the present embodiment tends to be more excellent in dispersibility of the filler, as the value obtained by subtracting the storage elastic modulus at a strain of 10% at 50°C from the storage elastic modulus at a strain of 0.1% at 50°C is smaller.

The reason for this is because, when the filler is cohered due to inferior dispersibility thereof, the filler is still cohered in a small strain region to result in an increase in storage elastic modulus of the crosslinked rubber composition, whereas cohesion of the filler is broken in a large strain region to result in a reduction in storage elastic modulus of the crosslinked rubber composition. In other words, the reason is because dispersibility of the filler can be figured out by the difference between the respective storage elastic moduli of the crosslinked rubber composition at a small strain and a large strain and a smaller value of (Storage elastic modulus at a strain of 0.1% at 50°C) - (Storage elastic modulus at a strain of 10% at 50°C) can be determined to indicate more excellent dispersibility of the filler.

In the present embodiment, the crosslinked rubber composition, in which the balance of the dispersibility of the filler is controlled and properties are excellent, is obtained from the viewpoints described below.

The dispersibility of the filler in the crosslinked rubber composition of the present embodiment is preferably excellent from the viewpoint of the compression set and the dynamic spring constant of the crosslinked rubber composition of the present embodiment, and the upper limit value in the expression (2) is preferably less than 10 MPa, more preferably 8 MPa or less, further preferably 7 MPa or less.

On the other hand, for the above reasons, the storage elastic modulus of the crosslinked rubber composition tends to be reduced as the filler is more excellent in dispersibility even at the same content of the filler. Therefore, very favorable dispersibility causes a considerable reduction in storage elastic modulus, resulting in inferior strength.

Therefore, the lower limit value in the expression (2) is preferably more than 0.5 MPa, more preferably 1.0 MPa or more, further preferably 1.5 MPa or more.

The dispersibility of the filler in the crosslinked rubber composition of the present embodiment can be controlled by adjustment of the kneading time, kneading at a high torque, and use of a filler hardly cohesive by hydrogen binding or the like during kneading of the rubber component (A), various fillers such as the carbon black (B), and other additive, and by addition of the silane coupling agent in the case of the filler including the silica-based inorganic filler, and can satisfy a relationship of the expression (2).

(Softener for rubber)

The crosslinked rubber composition of the present embodiment and a rubber composition before crosslinking may contain a softener for rubber in order to improve processability.

Suitable examples of the softener for rubber include a mineral oil-based softener for rubber and a synthetic softener which is liquid or which has a low molecular weight.

The mineral oil-based softener for rubber is also called process oil or extender oil, and is used in order to soften rubber, increase the volume of rubber, and enhance processability of rubber. The mineral oil-based softener for rubber is a mixture of compounds having an aromatic ring, a naphthene ring, a paraffin chain, and the like, and one where the number of carbon atoms in a paraffin chain is 50% or more of the number of all carbon atoms is called paraffin-based softener, one where the number of carbon atoms in a naphthene ring is 30 to 45% thereof is called naphthene-based softener, and one where the number of aromatic carbon atoms is more than 30% thereof is called aromatic softener.

A case where the hydrogenated conjugated diene-based polymer used in the crosslinked rubber composition of the present embodiment is a copolymer having a conjugated diene monomer unit and an aromatic vinyl monomer unit is preferable because the softener for rubber, which has a proper aromatic vinyl monomer unit content, tends to have better affinity with the hydrogenated conjugated diene-based polymer.

The content of the softener for rubber is preferably 0 parts by mass or more, more preferably 3 parts by mass or more, further preferably 5 parts by mass or more based on 100 parts by mass of the rubber component (A) from the viewpoint of an improvement in processability. The content is preferably 100 parts by mass or less, more preferably 80 parts by mass or less, further preferably 60 parts by mass or less from the viewpoint that bleed out can be suppressed and stickiness on a surface of the crosslinked rubber composition can be prevented.

[Method for producing crosslinked rubber composition]

The crosslinked rubber composition of the present embodiment can be produced by mixing constituent materials of the crosslinked rubber composition of the present embodiment: the rubber component (A), the carbon black (B) and,

if necessary, other filler, and additives such as the silane coupling agent and the softener for rubber; to obtain a rubber composition, and crosslinking the rubber composition.

Examples of the mixing method include, but not limited to the following, a melt-kneading method with a common mixing machine such as an open roll, a Bunbury mixer, a kneader, a monoaxial screw extruder, a biaxial screw extruder, or a multiaxial screw extruder, and a method including dissolving and mixing each component, and then removing a solvent by heating.

In particular, a kneading method with a roll, a Bunbury mixer, a kneader, or an extruder is preferable from the viewpoint of productivity and good kneading properties.

Either a method including kneading materials constituting the crosslinked rubber composition of the present embodiment at once or a method including dividing and mixing such materials in multiple portions can also be applied.

A method for producing the crosslinked rubber composition of the present embodiment preferably has a step of crosslinking the hydrogenated conjugated diene-based polymer (rubber-like polymer 1) by a crosslinker.

Examples of the crosslinker include, but not limited to the following, radical generators such as organic peroxide and azo compounds, oxime compounds, nitroso compounds, polyamine compounds, sulfur, and sulfur compounds. Such sulfur compounds include sulfur monochloride, sulfur dichloride, disulfide compounds, and polymer polysulfide compounds.

The amount of blending of the crosslinker is preferably 0.01 parts by mass or more, more preferably 0.1 parts by mass or more, further preferably 1 part by mass or more based on 100 parts by mass of the rubber component (A) from the viewpoint of an enhancement in breaking strength by the reinforcement effect. The amount of blending of the crosslinker is preferably 20 parts by mass or less, more preferably 15 parts by mass or less, further preferably 10 parts by mass or less based on 100 parts by mass of the rubber component (A) from the viewpoint of enhancements in flexibility and fracture elongation.

A conventionally known method can be applied to the crosslinking method. The crosslinking temperature is not particularly limited, and is preferably 120°C or more, more preferably 140°C or more, further preferably 150°C or more from the viewpoint that the crosslinking time can be shortened and the production efficiency is increased. The crosslinking temperature is preferably 200°C or less, more preferably 180°C or less, further preferably 165°C or less from the viewpoint of suppression of thermal degradation in crosslinking.

A vulcanization accelerator may be, if necessary, used in a case where crosslinking with sulfur is performed.

A conventionally known material can be used as the vulcanization accelerator, and examples include, but not limited to the following, vulcanization accelerators such as sulfenamide-based compounds, guanidine-based compounds, thiuram-based compounds, aldehyde-amine-based compounds, aldehyde-ammonia-based compounds, thiazole-based compounds, thiourea-based compounds, and dithiocarbamate-based compounds.

The method for producing the crosslinked rubber composition of the present embodiment preferably has a step of crosslinking the hydrogenated conjugated diene-based polymer (rubber-like polymer 1) by the above sulfur and vulcanization accelerator, or organic peroxide.

A vulcanization aid may be used in the above crosslinking with sulfur.

Examples of the vulcanization aid include, but not limited to the following, zinc flower and stearic acid.

Various additives other than various materials described above, such as other softener and filler, and a heat-resistant stabilizer, an antistatic agent, a weathering stabilizer, an anti-aging agent, a colorant, and a lubricant may be added in the method for producing the crosslinked rubber composition of the present embodiment, as long as the objects of the present invention are not impaired.

A known softener can be used as such other softener. Examples of such other filler include calcium carbonate, magnesium carbonate, aluminum sulfate, and barium sulfate.

The above heat-resistant stabilizer, antistatic agent, weathering stabilizer, anti-aging agent, colorant, and lubricant here used can be each known material.

(Suitable mode of method for producing crosslinked rubber composition)

A suitable form of the method for producing the crosslinked rubber composition of the present embodiment includes a step of forming a hydrogenated conjugated diene-based polymer having a degree of hydrogenation or 10% or more and 99% or less, an aromatic vinyl monomer block content of less than 5% by mass, a weight average molecular weight of 150000 or more and 1500000 or less, a glass transition temperature of -50°C or less and an aromatic vinyl monomer unit content of 5% by mass or more, a step of obtaining a rubber component (A) including 10% by mass or more and 100% by mass or less of the hydrogenated conjugated diene-based polymer and having an iodine value of 10 or more and 370 or less, a step of mixing 100 parts by mass of the rubber component (A), 10 parts by mass or more and 120 parts by mass or less of the carbon black (B) to obtain a rubber composition, and a step of crosslinking the rubber composition, and provides the crosslinked rubber composition in which the change in shore A hardness after heating under air at 100°C for 72 hours compared with that before the heating satisfies the following expression (1):

$$-10 < (\text{Shore A harndess after heating}) - (\text{Shore A hardness before heating}) < 5 \quad (1).$$

According to the method for producing the crosslinked rubber composition of the present embodiment, the crosslinked rubber composition, which is favorable in balance between vibration isolation characteristics and heat resistance, can be produced.

According to the method for producing the crosslinked rubber of the present embodiment, in the step of crosslinking the hydrogenated conjugated diene-based polymer, the rubber composition including the rubber component (A) and the carbon black (B) may be crosslinked in the state of being molded.

Thus, the freedom of the final form of the objective crosslinked rubber composition can be increased.

[Application of crosslinked rubber composition]

The crosslinked rubber composition of the present embodiment can be used as, for example, a material for vibration isolation rubber, vibration insulation rubber, conveyor belts, shoe soles such as outsoles for shoes, weather strip for automobiles, packings or gaskets, seal materials, waterproof sheets, engine mounts, air springs, rubber gloves, medical and sanitary goods, rubber rollers, hoses for industrial and various applications, battery cases, adhesives, wire coverings, window frame rubber, and various industrial products. The crosslinked rubber composition of the present embodiment can be formed to provide various formed products in these applications.

The structure and the amount of blending of the hydrogenated conjugated diene-based polymer used in the crosslinked rubber composition of the present embodiment can be adjusted to decrease the compression set of the crosslinked rubber composition. The crosslinked rubber composition, which is small in compression set, is suitable for vibration isolation rubber, vibration control materials, packings, seal materials, rubber roller, rubber stoppers, and medical sanitary goods.

For example, in a case where the compression set in heating at 100°C for 72 hours of the crosslinked rubber composition is 10% or less, the crosslinked rubber composition is suitable particularly for seal materials (packings, gaskets), medical sanitary goods, and rubber rollers for printers. In particular, the crosslinked rubber composition is suitable for a seal material provided on a portion to be exposed to a low-temperature material such as liquefied gas because the glass transition temperature of the hydrogenated conjugated diene-based polymer can be set to a low value.

In order that the compression set of the crosslinked rubber composition of the present embodiment falls within the above range, for example, the content of the hydrogenated conjugated diene-based polymer, with respect to the compositional profile of the crosslinked rubber composition, is preferably 90% by mass or more, more preferably 100% by mass. The degree of hydrogenation in the hydrogenated conjugated diene-based polymer is preferably 30% or more and 98% or less, more preferably 40% or more and 95% or less.

In a case where the compression set in heating at 100°C for 72 hours, of the crosslinked rubber composition, is 30% or less, the crosslinked rubber composition is suitable particularly for vibration isolation rubber and vibration control materials.

In order that the compression set of the crosslinked rubber composition of the present embodiment falls within the above range, for example, the content of the hydrogenated conjugated diene-based polymer, with respect to the compositional profile of the crosslinked rubber composition, is preferably 80% by mass or more, more preferably 90% by mass or more. The degree of hydrogenation in the hydrogenated conjugated diene-based polymer to be blended is preferably 400 or more and 99% or less, more preferably 50% or more and 99% or less.

## Examples

Hereinafter, the present embodiment is described in more detail with reference to specific Polymerization Examples, Examples and Comparative Examples, but the present embodiment is not limited by the following Polymerization Examples, Examples and Comparative Examples at all.

Various physical properties in Polymerization Examples, Examples and Comparative Examples were measured by methods shown below.

[Methods for measuring physical properties]

[Weight average molecular weight (Mw) of each of Polymers 1 to 25]

The weight average molecular weight (Mw) was determined based on the calibration curve with standard polystyrene, by preparing each of Polymers 1 to 25 as a measurement specimen and measuring a chromatogram with

a GPC measurement apparatus where three columns each including polystyrene-based gel as a filler were connected. Specific measurement conditions are shown below. Twenty μL of the following measurement liquid was injected to the GPC measurement apparatus to perform such measurement.

(Measurement conditions)

Apparatus: trade name "HLC-8320GPC" manufactured by Tosoh Corporation
Eluent: 5 mmol/L triethylamine-containing tetrahydrofuran (THF)
Guard column: trade name "TSK guard column Super H-H" manufactured by Tosoh Corporation
Separation column: trade names "TSK gel Super H5000", "TSK gel Super H6000", and "TSK gel Super H7000" manufactured by Tosoh Corporation, connected in the listed order.
Oven temperature: 40°C
Flow rate: 0.6 mL/min
Detector: RI detector (trade name "HLC8020" manufactured by Tosoh Corporation)
Measurement liquid: measurement solution of 10 mg of each measurement specimen dissolved in 20 mL of THF

[Degree of modification in each of Polymers 1 to 25]

The degrees of modification in Polymers 1 to 25 were each measured as follows according to a column adsorption GPC method, by use of the property of a modified polymer to adsorb to a column.

The degree of modification was determined by preparing each of Polymers 1 to 25 as a measurement specimen, using a specimen solution containing the specimen and low-molecular weight internal standard polystyrene to measure a chromatogram with a column (polystyrene-based column) packed with polystyrene-based gel and a chromatogram with a column (silica-based column) packed with silica-based gel and then determine the difference between the chromatograms, and determining the amount of adsorption to the silica-based column, from the difference.

GPC measurement conditions with the polystyrene-based column are shown below. Twenty μL of the following measurement liquid was injected to the GPC measurement apparatus to perform such measurement.

(GPC measurement conditions with polystyrene-based column):

Apparatus: trade name "HLC-8320GPC" manufactured by Tosoh Corporation
Eluent: 5 mmol/L triethylamine-containing THF
Guard column: trade name "TSK guard column Super H-H" manufactured by Tosoh Corporation
Column: trade names "TSK gel Super H5000", "TSK gel Super H6000", and "TSK gel Super H7000" manufactured by Tosoh Corporation, connected in the listed order
Oven temperature: 40°C
Flow rate: 0.6 mL/min
Detector: RI detector (HLC8020 manufactured by Tosoh Corporation)
Measurement liquid: specimen solution obtained by dissolving 10 mg of specimen and 5 mg of standard polystyrene in 20 mL of THF.

GPC measurement conditions with the silica-based column are shown below. Fifty μL of the following measurement liquid was injected to the GPC measurement apparatus to perform such measurement.

(GPC measurement conditions with silica-based column):

Apparatus: trade name "HLC-8320GPC" manufactured by Tosoh Corporation
Eluent: THF
Guard column: trade name "DIOL 4.6 × 12.5 mm 5 micron" manufactured by GL Sciences Inc.
Separation column: trade names "Zorbax PSM-1000S", "PSM-300S", and "PSM-60S" manufactured by Agilent Technologies, connected in the listed order
Oven temperature: 40°C,
Flow rate: 0.5 mL/min
Detector: RI detector (HLC8020 manufactured by Tosoh Corporation)

(Method for calculating degree of modification):

The degree of modification (%) was determined by the following expression, in which the peak area of the

specimen was designated as P1 and the peak area of standard polystyrene was designated as P2 under the assumption that the entire peak area of the chromatogram with the polystyrene-based column was 100, and the peak area of the specimen was designated as P3 and the peak area of standard polystyrene was designated as P4 under the assumption that the entire peak area of the chromatogram with the silica-based column was 100.

$$\text{Degree of modification (\%)} = [1 - (P2 \times P3) / (P1 \times P4)] \times 100$$

(wherein P1 + P2 = P3 + P4 = 100)

[Degree of coupling of each of Polymers 1 to 25]

Each chromatogram was measured in the same manner as the method for measuring the weight average molecular weight of each of Polymers 1 to 25, and the degree of coupling of each of Polymers 1 to 25 was calculated from the ratio between the peak area assigned to no coupling (peak at the lower molecular weight side) and the peak area assigned to coupling (peak at the higher molecular weight side).

[Mooney viscosity and Mooney stress relaxation of each of Polymers 1 to 25]

The Mooney viscosity and the Mooney stress relaxation (degree of relaxation) of each of Polymers 1 to 25 were measured with a Mooney viscometer (trade name "VR1132" manufactured by Ueshima Seisakusho Co., Ltd.), according to JIS K6300 (ISO289-1) and ISO289-4. The measurement temperature was 100°C.

First, each specimen was preheated for 1 minute, thereafter a rotor was rotated at 2 rpm, and the torque after 4 minutes was measured and defined as the Mooney viscosity ($ML_{(1+4)}$). Thereafter, rotation of the rotor was immediately terminated, the torque every 0.1 seconds for 1.6 to 5 seconds after the termination was recorded with a Mooney unit, the inclination of the line in double logarithmic plot of the torque and the time (sec) was determined, and the absolute value thereof was defined as the Mooney stress relaxation (MSR).

[Styrene content and amount of vinyl bond in each of Polymers 1 to 25 before hydrogenation, and amount of vinyl bond and degree of hydrogenation in each of Polymers 1 to 25]

The aromatic vinyl monomer unit (styrene) content, and the amount of vinyl bond in a conjugated diene monomer unit component were calculated from the integrated value with respect to an unsaturated bond moiety of a polymer before hydrogenation, by $^1$H-NMR measurement.

Next, a large amount of methanol was added to a reaction liquid after hydrogenation reaction, thereby precipitating and recovering the polymer. Next, the polymer was extracted with acetone, and dried in vacuum. The polymer was used as a sample for $^1$H-NMR measurement, and the amount of vinyl bond and the degree of hydrogenation were measured. $^1$H-NMR measurement conditions are noted below.

(Measurement conditions)

Measurement equipment: JNM-LA400 (manufactured by JEOL Ltd.)
Solvent: deuterated chloroform
Measurement sample: each sample extracted before and after hydrogenation of polymer
Sample concentration: 50 mg/mL
Observation frequency: 400 MHz
Chemical shift reference: TMS (tetramethylsilane) Pulse delay: 2.904 seconds
Number of scanning times: 64
Pulse width: 45°
Measurement temperature: 26°C

[Styrene block content in each of Polymers 1 to 25]

A chain where 8 or more styrene structure units were linked was defined as a styrene block, and the styrene block content was determined as follows.

The proportion of the integrated value in the range of each chemical shift (S) of the following (X) was determined from a $^1$H-NMR spectrum at 400 MHz measured with each of Polymers 1 to 25 as a specimen and deuterated chloroform

as a solvent, and the content of the styrene block contained in each of Polymers 1 to 25 was determined.
(X) Chain with 8 or more styrene structure units:

$$6.00 \leq S < 6.68$$

[Glass transition temperature of each of Polymers 1 to 25]

A DSC curve was recorded under rise of temperature in a predetermined temperature range according to ISO22768:2006, with each of Polymers 1 to 25 as a specimen, and the peak top (Inflection point) in a DSC differential curve was defined as the glass transition temperature.
The measurement apparatus used was a differential scanning calorimeter DSC7020 manufactured by Hitachi High-Tech Science Corporation.

[Metal content (amount of Al, amount of Ti) in each of Polymers 1 to 25]

The aluminum content (amount of Al, unit ppm) and the titanium content (amount of Ti, unit ppm) of each of Polymers 1 to 25 were measured with such each Polymer as a specimen, through elemental analysis with inductivity coupled plasma (ICP, manufactured by Shimadzu Corporation, apparatus name: ICPS-7510).

[Iodine value of each of Polymers 1 to 25]

The iodine value of each of Polymers 1 to 25 was calculated according to the method described in "JIS K 0070:1992".

[Iodine value of rubber component (A)]

The iodine value (I g/100 g) of the rubber component (A) was calculated according to the method described in "JIS K 0070:1992".

[Production of polymer]

(Preparation of hydrogenation catalyst)

A hydrogenation catalyst used for preparation of each of Polymers 1 to 25 described below was prepared by a method shown in Production Example 1 below.

<Production Example 1>

A reaction vessel purged with nitrogen was charged with 2 L of cyclohexane dried and purified, and 40 mmol of bis(η5-cyclopentadienyl)titanium di-(p-tolyl) and 150 g of 1,2-polybutadiene (amount of 1,2-vinyl bond: about 85% by mol) having a molecular weight of about 1,000 were dissolved therein. Thereafter, a cyclohexane solution containing 60 mmol of n-butyllithium was added to the reaction vessel, to allow reaction to occur at room temperature for 5 minutes, and 40 mmol of n-butanol was immediately added and the resultant was stirred to obtain a hydrogenation catalyst (T). The hydrogenation catalyst obtained was stored at room temperature.

(Polymerization Example 1) Polymer 1

A temperature-controllable autoclave having an inner volume of 40 L, equipped with a stirrer and a jacket, was used as a reactor, 2,760 g of 1,3-butadiene, 240 g of styrene, 21,000 g of cyclohexane, and 0.55 mol of tetrahydrofuran (THF) and 2.9 mmol of 2,2-bis(2-oxolanyl)propane as polar substances, from which impurities were removed in advance, were placed in the reactor, and the temperature in the reactor was kept at 45°C. To the reactor was fed 37 mmol of n-butyllithium as a polymerization initiator.
After the initiation of polymerization reaction, the temperature in the reactor was started to be raised due to heat generation by polymerization, and the final temperature in the reactor attained to 77°C. After 2 minutes from attainment to the reaction temperature peak, 7.3 mmol of 2,2-dimethoxy-1-(3-trimethoxysilylpropyl)-1-aza-2-silacyclopentane (compound A) was added as a coupling agent to the reactor, and coupling reaction was performed for 20 minutes. To the polymer solution was added 7.3 mmol of methanol as a reaction terminator, and a polymer solution was

obtained.

To the polymer solution were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the polymer solution was dropped into warm water to remove the solvent, and subjected to a drying treatment with a drier, and Polymer 1 was thus obtained. The results of analysis are shown in Table 4.

(Polymerization Example 2) Polymer 2

A temperature-controllable autoclave having an inner volume of 40 L, equipped with a stirrer and a jacket, was used as a reactor, 2,760 g of 1,3-butadiene, 240 g of styrene, 21,000 g of cyclohexane, and 0.55 mol of tetrahydrofuran (THF) and 2.9 mmol of 2,2-bis(2-oxolanyl)propane as polar substances, from which impurities were removed in advance, were placed in the reactor, and the temperature in the reactor was kept at 45°C. To the reactor was fed 37 mmol of n-butyllithium as a polymerization initiator.

After the initiation of polymerization reaction, the temperature in the reactor was started to be raised due to heat generation by polymerization, and the final temperature in the reactor attained to 77°C. After 2 minutes from attainment to the reaction temperature peak, 7.3 mmol of 2,2-dimethoxy-1-(3-trimethoxysilylpropyl)-1-aza-2-silacyclopentane (compound A) was added as a coupling agent to the reactor, and coupling reaction was performed for 20 minutes. To the polymer solution was added 7.3 mmol of methanol as a reaction terminator, and a polymer solution was obtained. One portion of the polymer solution was extracted, and subjected to solvent removal by a drier, and a polymer before hydrogenation was obtained. The results of analysis are shown in Table 4.

To polymer solution before hydrogenation was added 50 ppm on a Ti basis of the hydrogenation catalyst (T) per 100 parts by mass of the polymer before hydrogenation, and hydrogenation reaction was performed at a hydrogen pressure of 0.8 MPa and an average temperature of 85°C for 80 minutes. To the polymer solution obtained were added 12.6 g of n-octadecyl-3-(3,5-di-t-butyl-4-hydrooxyphenyl)-propionate and 3.0 g of 4,6-bis(octylthiomethyl)-o-cresol as antioxidants, thereafter the polymer solution was dropped into warm water to remove the solvent, and subjected to a drying treatment with a drier, and Polymer 2 was thus obtained.

(Polymerization Examples 3 to 8, 10, 11, and 13 to 25): Polymers 3 to 8, 10, 11, and 13 to 25

Polymers 3 to 8, 10, 11, and 13 to 25 were each obtained by polymerization under the same conditions as in Polymerization Example 2 described above except that raw materials, the types of additives, and the amounts of addition thereof were changed as described in Table 1 to Table 3, and the temperature and the amount of addition of hydrogen were controlled in hydrogenation reaction.

The results of analysis are shown in Table 4 to Table 6.

(Polymerization Example 9): Polymer 9

Polymer 9 was obtained by polymerization under the same conditions as in Polymerization Example 1 described above except that raw materials, the types of additives, and the amounts of addition thereof were changed as described in Table 2.

The results of analysis are shown in Table 5.

(Polymerization Example 12) Polymer 12

A temperature-controllable autoclave having an inner volume of 40 L, equipped with a stirrer and a jacket, was used as a reactor, 450 g of styrene, 21,000 g of cyclohexane, and 0.50 mol of tetrahydrofuran (THF) and 7.3 mmol of 2,2-bis(2-oxolanyl)propane as polar substances, from which impurities were removed in advance, were placed in the reactor, and the temperature in the reactor was kept at 52°C. To the reactor was fed 61 mmol of n-butyllithium as a polymerization initiator.

After the initiation of polymerization reaction, the temperature in the reactor was started to be raised due to heat generation by polymerization, and 2,550 g of 1,3-butadiene was added after 5 minutes from sensing of the temperature peak. Thereafter, the reaction was continued, and the final temperature in the reactor attained to 83°C. After 2 minutes from attainment to the reaction temperature peak, 16.3 mmol of tetramethoxysilane (compound C) was added as a coupling agent to the reactor, and coupling reaction was performed for 20 minutes. To the polymer solution was added 12.2 mmol of methanol as a reaction terminator, and a polymer solution was obtained. One portion of the polymer solution was extracted, and subjected to solvent removal by a drier, and a polymer before hydrogenation was obtained. The results of analysis are shown in Table 5.

To polymer solution before hydrogenation was added 50 ppm on a Ti basis of the hydrogenation catalyst (T) per 100 parts by mass of the polymer before hydrogenation, and hydrogenation reaction was performed at a hydrogen pressure of 0.8 MPa and an average temperature of 85°C for 70 minutes. To the polymer solution obtained were added

12.6 g of n-octadecyl-3-(3,5-di-t-butyl-4-hydrooxyphenyl)-propionate and 3.0 g of 4,6-bis(octylthiomethyl)-o-cresol as antioxidants, thereafter the polymer solution was dropped into warm water to remove the solvent, and subjected to a drying treatment with a drier, and Polymer 12 was thus obtained. The results of analysis are shown in Table 5.

The types of Coupling agents/Modifying agents A to E in Table 1 to Table 3 below are shown below.

Compound A: 2,2-dimethoxy-1-(3-trimethoxysilylpropyl)-1-aza-2-silacyclopentane
Compound B: 1,3-dimethyl-2-imidazolidinone
Compound C: tetramethoxysilane
Compound D: silicon tetrachloride
Compound E: N,N,N',N'-tetrakis(3-trimethoxysilylpropyl)-1,3-propanediamine

[Table 1]

| Production Example | | | Polymerization Example 1 | Polymerization Example 2 | Polymerization Example 3 | Polymerization Example 4 | Polymerization Example 5 | Polymerization Example 6 | Polymerization Example 7 | Polymerization Example 8 |
|---|---|---|---|---|---|---|---|---|---|---|
| Cyclohexane | | g | 21000 | 21000 | 21000 | 21000 | 21000 | 21000 | 21000 | 21000 |
| Styrene | | g | 240 | 240 | 240 | 240 | 240 | 240 | 240 | 240 |
| Butadiene | | g | 2760 | 2760 | 2760 | 2760 | 2760 | 2760 | 2760 | 2760 |
| n-Butyllithium | | mmol | 37 | 37 | 37 | 37 | 15 | 16 | 37 | 15 |
| Tetrahydrofuran | | mol | 0.55 | 0.55 | 0.55 | 0.55 | 0.44 | 0.49 | 0.55 | 0.44 |
| BOP | | mmol | 2.9 | 2.9 | 2.9 | 2.9 | 1.5 | 1.6 | 2.9 | 1.5 |
| Coupling agent/ Modifying agent | Type | | A | A | A | A | B | B/A | C | - |
| | Amount of addition | mmol | 7.3 | 7.3 | 7.3 | 7.3 | 11.6 | 23.7/0.64 | 9.9 | 0 |
| Methanol | | mmol | 7.3 | 7.3 | 7.3 | 7.3 | 14.5 | 13.1 | 5.8 | 14.5 |
| Hydrogenation catalyst | Type | | - | T | T | T | T | T | T | T |
| | Amount of addition | ppm | - | 50 | 50 | 50 | 50 | 50 | 50 | 50 |

[Table 2]

| Production Example | | | Polymerization Example 9 | Polymerization Example 10 | Polymerization Example 11 | Polymerization Example 12 | Polymerization Example 13 | Polymerization Example 14 | Polymerization Example 15 | Polymerization Example 16 |
|---|---|---|---|---|---|---|---|---|---|---|
| Cyclohexane | | g | 21000 | 21000 | 21000 | 21000 | 21000 | 21000 | 21000 | 21001 |
| Styrene | | g | 780 | 780 | 450 | 450 | 1230 | 120 | 450 | 240 |
| Butadiene | | g | 2220 | 2220 | 2550 | 2550 | 1770 | 2880 | 2550 | 2760 |
| n-Butyllithium | | mmol | 23 | 23 | 22 | 61 | 52 | 76 | 19 | 46 |
| Tetrahydrofuran | | mol | 0.35 | 0.35 | 0.19 | 0.50 | 0.77 | 1.14 | 0.29 | 0.70 |
| BOP | | mmol | 19.2 | 19.2 | 0.0 | 7.3 | 2.1 | 13.7 | 16.3 | 9.3 |
| Coupling agent/ Modifying agent | Type | | A | A | D | C | A | A | E | - |
| | Amount of addition | mmol | 4.7 | 4.7 | 3.2 | 16.3 | 10.3 | 15.2 | 1.9 | 0 |
| Methanol | | mmol | 4.7 | 4.7 | 19.2 | 12.2 | 9.8 | 14.4 | 3.5 | 14.5 |
| Hydrogenation catalyst | Type | | - | T | T | T | T | T | T | T |
| | Amount of addition | ppm | - | 50 | 50 | 50 | 50 | 50 | 50 | 50 |

[Table 3]

| Production Example | | | Polymerization Example 17 | Polymerization Example 18 | Polymerization Example 19 | Polymerization Example 20 | Polymerization Example 21 | Polymerization Example 22 | Polymerization Example 23 | Polymerization Example 24 | Polymerization Example 25 |
|---|---|---|---|---|---|---|---|---|---|---|---|
| Cyclohexane | | g | 21000 | 21000 | 21000 | 21000 | 21000 | 21000 | 21000 | 21000 | 21000 |
| Styrene | | g | 420 | 420 | 420 | 420 | 120 | 450 | 0 | 0 | 900 |
| Butadiene | | g | 2580 | 2580 | 2580 | 2580 | 2880 | 2550 | 3000 | 3000 | 2100 |
| n-Butyllithium | | mmol | 29 | 29 | 29 | 29 | 36 | 21 | 36 | 36 | 37 |
| Tetrahydrofuran | | mol | 0.34 | 0.34 | 0.34 | 0.34 | 0.42 | 0.26 | 0.61 | 0.61 | 0.61 |
| BOP | | mmol | 6.2 | 6.2 | 6.2 | 6.2 | 2.5 | 3.6 | 6.5 | 6.5 | 13.2 |
| Coupling agent/ Modifying agent | Type | | A | B/A | B/A | B/A | A | A | A | A/C | A |
| | Amount of addition | mmol | 4.3 | 4.3/4.2 | 4.3/8.6 | 4.3/12.8 | 6.6 | 2.1 | 6.3 | 2.2/4.0 | 7.4 |
| Methanol | | mmol | 11.3 | 11.3 | 11.3 | 11.3 | 8.8 | 12.3 | 10.8 | 10.8 | 7.3 |
| Hydrogenation catalyst | Type | | T | T | T | T | T | T | T | T | T |
| | Amount of addition | ppm | 50 | 50 | 50 | 50 | 50 | 50 | 50 | 51 | 50 |

[Table 4]

| | Polymerization Example | | Polymerization Example 1 | Polymerization Example 2 | Polymerization Example 3 | Polymerization Example 4 | Polymerization Example 5 | Polymerization Example 6 | Polymerization Example 7 | Polymerization Example 8 |
|---|---|---|---|---|---|---|---|---|---|---|
| | Polymer | | Polymer 1 | Polymer 2 | Polymer 3 | Polymer 4 | Polymer 5 | Polymer 6 | Polymer 7 | Polymer 8 |
| Analysis values of polymer before hydrogenation | Styrene content | % by mass | 8 | 8 | 8 | 8 | 8 | 8 | 8 | 8 |
| | Amount of vinyl bond | % by mol | 38 | 38 | 38 | 38 | 38 | 38 | 38 | 38 |

(continued)

| | Polymerization Example | | Polymerization Example 1 | Polymerization Example 2 | Polymerization Example 3 | Polymerization Example 4 | Polymerization Example 5 | Polymerization Example 6 | Polymerization Example 7 | Polymerization Example 8 |
|---|---|---|---|---|---|---|---|---|---|---|
| | Polymer | | Polymer 1 | Polymer 2 | Polymer 3 | Polymer 4 | Polymer 5 | Polymer 6 | Polymer 7 | Polymer 8 |
| Analysis values of hydrogenated conjugated diene-based polymer | Styrene block content | % by mass | 1.2 | 1.2 | 1.2 | 1.2 | 1.2 | 1.2 | 1.2 | 1.2 |
| | Amount of vinyl bond | % by mol | 38 | 2.3 | 0.8 | 0.4 | 0.8 | 0.8 | 0.8 | 0.8 |
| | Weight average molecular weight | $\times 10^4$ | 35 | 35 | 35 | 35 | 38 | 42 | 31 | 38 |
| | Degree of coupling | % | 80 | 80 | 80 | 80 | 0 | 16 | 83 | 0 |
| | Degree of modification | % | 80 | 80 | 80 | 80 | 75 | 75 | 0 | 0 |
| | Mooney viscosity (ML1+4) | | 45 | 69 | 80 | 88 | 92 | 97 | 76 | 87 |
| | Mooney stress relaxation (MSR) | | 0.55 | 0.49 | 0.44 | 0.41 | 0.83 | 0.78 | 0.46 | 0.86 |
| | Degree of hydrogenation | % | 0 | 65 | 78 | 95 | 78 | 78 | 78 | 78 |
| | Iodine value | I g/100 g | 432 | 151 | 95 | 22 | 95 | 95 | 95 | 95 |
| | Glass transition temperature | °C | -64 | -67.1 | -63.5 | -61.1 | -63.5 | -63.5 | -63.5 | -63.5 |
| | Titanium content | ppm | 0 | 46 | 46 | 46 | 46 | 46 | 46 | 46 |
| | Aluminum content | ppm | 0 | 0 | 0 | 0 | 0 | 0 | 0 | 0 |

[Table 5]

| | Polymerization Example | | Polymerization Example 9 | Polymerization Example 10 | Polymerization Example 11 | Polymerization Example 12 | Polymerization Example 13 | Polymerization Example 14 | Polymerization Example 15 | Polymerization Example 16 |
|---|---|---|---|---|---|---|---|---|---|---|
| | Polymer | | Polymer 9 | Polymer 10 | Polymer 11 | Polymer 12 | Polymer 13 | Polymer 14 | Polymer 15 | Polymer 16 |
| Analysis values of polymer before hydrogenation | Styrene content | % by mass | 26 | 26 | 15 | 15 | 41 | 4 | 15 | 8 |
| | Amount of vinyl bond | % by mol | 55 | 55 | 20 | 30 | 23 | 35 | 55 | 38 |

(continued)

| | Polymerization Example | | Polymerization Example 9 | Polymerization Example 10 | Polymerization Example 11 | Polymerization Example 12 | Polymerization Example 13 | Polymerization Example 14 | Polymerization Example 15 | Polymerization Example 16 |
|---|---|---|---|---|---|---|---|---|---|---|
| | Polymer | | Polymer 9 | Polymer 10 | Polymer 11 | Polymer 12 | Polymer 13 | Polymer 14 | Polymer 15 | Polymer 16 |
| Analysis values of hydrogenated conjugated diene-based polymer | Styrene block content | % by mass | 1.8 | 1.8 | 5.2 | 15 | 4.2 | 0.3 | 1.1 | 1.2 |
| | Amount of vinyl bond | % by mol | 55 | 1.1 | 0.4 | 0.9 | 0.7 | 0.4 | 2.8 | 1.5 |
| | Weight average molecular weight | $\times 10^4$ | 45 | 45 | 30 | 20 | 21 | 18 | 68 | 11 |
| | Degree of coupling | % | 80 | 80 | 40 | 70 | 80 | 80 | 80 | 0 |
| | Degree of modification | % | 80 | 80 | 0 | 80 | 80 | 80 | 80 | 0 |
| | Mooney viscosity (ML1+4) | | 65 | 67 | 70 | 108 | 72 | 59 | 82 | 41 |
| | Mooney stress relaxation (MSR) | | 0.74 | 0.54 | 0.75 | 0.21 | 0.47 | 0.58 | 0.52 | 0.82 |
| | Degree of hydrogenation | % | 0 | 78 | 78 | 72 | 75 | 92 | 70 | 80 |
| | Iodine value | I g/100 g | 348 | 77 | 88 | 112 | 69 | 36 | 120 | 268 |
| | Glass transition temperature | °C | -30.0 | -38.2 | -65.0 | -59.0 | -20 | -54 | -51 | -66 |
| | Titanium content | ppm | 0 | 46 | 46 | 46 | 46 | 46 | 46 | 46 |
| | Aluminum content | ppm | 0 | 0 | 0 | 0 | 0 | 0 | 0 | 0 |

[Table 6]

| | | | | | | | | | | | |
|---|---|---|---|---|---|---|---|---|---|---|---|
| | Polymerization Example | | Polymerization Example 17 | Polymerization Example 18 | Polymerization Example 19 | Polymerization Example 20 | Polymerization Example 21 | Polymerization Example 22 | Polymerization Example 23 | Polymerization Example 24 | Polymerization Example 25 |
| | Polymer | | Polymer 17 | Polymer 18 | Polymer 19 | Polymer 20 | Polymer 21 | Polymer 22 | Polymer 23 | Polymer 24 | Polymer 25 |
| Analysis values of polymer before hydrogenation | Styrene content | % by mass | 14 | 14 | 14 | 14 | 4 | 15 | 0 | 0 | 30 |
| | Amount of vinyl bond | % by mol | 43 | 43 | 43 | 43 | 27 | 35 | 40 | 40 | 38 |

(continued)

| | Polymerization Example | | Polymerization Example 17 | Polymerization Example 18 | Polymerization Example 19 | Polymerization Example 20 | Polymerization Example 21 | Polymerization Example 22 | Polymerization Example 23 | Polymerization Example 24 | Polymerization Example 25 |
|---|---|---|---|---|---|---|---|---|---|---|---|
| | Polymer | | Polymer 17 | Polymer 18 | Polymer 19 | Polymer 20 | Polymer 21 | Polymer 22 | Polymer 23 | Polymer 24 | Polymer 25 |
| Analysis values of hydrogenated conjugated diene-based polymer | Styrene block content | % by mass | 0.8 | 0.8 | 0.8 | 0.8 | 0.5 | 1.3 | 0 | 0 | 2.6 |
| | Amount of vinyl bond | % by mol | 1.3 | 1.3 | 1.3 | 1.3 | 1.1 | 2.0 | 0.9 | 0.9 | 1.2 |
| | Weight average molecular weight | $\times 10^4$ | 35 | 35 | 35 | 35 | 30 | 32 | 28 | 28 | 26 |
| | Degree of coupling | % | 62 | 62 | 62 | 62 | 75 | 40 | 70 | 70 | 80 |
| | Degree of modification | % | 62 | 74 | 94 | 97 | 75 | 40 | 70 | 25 | 80 |
| | Mooney viscosity (ML1+4) | | 59 | 64 | 66 | 66 | 52 | 70 | 75 | 75 | 94 |
| | Mooney stress relaxation (MSR) | | 0.62 | 0.62 | 0.62 | 0.62 | 0.54 | 0.85 | 0.46 | 0.46 | 0.28 |
| | Degree of hydrogenation | % | 78 | 78 | 78 | 78 | 55 | 60 | 80 | 80 | 78 |
| | Iodine value | I g/ 100 g | 89 | 89 | 89 | 89 | 203 | 160 | 94 | 94 | 72 |
| | Glass transition temperature | °C | -56 | -56 | -56 | -56 | -76 | -73 | -62 | -62 | -39 |
| | Titanium content | ppm | 46 | 46 | 46 | 46 | 46 | 46 | 46 | 46 | 46 |
| | Aluminum content | ppm | 0 | 0 | 0 | 0 | 0 | 0 | 0 | 0 | 0 |

[Production of rubber composition]

Each rubber composition containing a rubber component (A), carbon black (B), and a crosslinker (C) was obtained with each of Polymers 1 to 25 obtained in Polymerization Examples 1 to 25, and natural rubber, high cis-polybutadiene (BR) and ethylene-propylene-diene rubber (EPDM) in the rubber component (A), according to the following blending conditions and kneading method.

((Blending conditions 1) Examples 1 to 14, Example 27 to 34 and Comparative Examples 1 to 9)

· Rubber component (A) (Polymers 1 to 25 of Polymerization Examples 1 to 25, RSS No. 3 as natural rubber, U150 (trade name, manufactured by UBE Elastomer Co., Ltd.) as BR, and EP33 (trade name, manufactured by ENEOS Materials Corporation)) as EPDM: 100 parts by mass

The amount of addition of each blending agent described below was expressed by the number of parts by mass based on 100 parts by mass of the rubber component (A) including no softener for rubber, and was shown in Table 7 to Table 12.

- Carbon black (B) (trade name "Seast KH(N339)" manufactured by Tokai Carbon Co., Ltd.)
- Anti-aging agent (N-(1,3-dimethylbutyl)-N'-phenyl-p-phenylenediamine)
- Naphthenic oil
- Zinc flower
- Stearic acid
- Crosslinker (C) sulfur
- Vulcanization accelerator 1 (N-cyclohexyl-2-benzothiazolylsulfinamide)
- Vulcanization accelerator 2 (diphenyl guanidine)

<Kneading method>

The above materials were kneaded by the following method to obtain a rubber composition.

A sealed kneading machine (interior volume 0.3 L) equipped with a temperature control apparatus was used to knead the rubber component (A), filler (carbon black (B)), naphthenic oil, zinc flower, stearic acid and anti-aging agent at a filling degree of 65% and a number of rotor rotations of 30 to 50 rpm, as the first stage kneading.

The temperature of the sealed kneading machine was here controlled and a blended product at the first stage was obtained at a discharge temperature of 125 to 130°C.

After cooling, sulfur (crosslinker (C)), and the vulcanization accelerators 1 and 2 were added and kneaded in an open roll set at 70°C, as the second stage kneading. Thereafter, the resultant was molded, vulcanized with vulcanizing press at 160°C for a predetermined time described in Table 5 to Table 7, and crosslinked.

The rubber composition before vulcanization and the crosslinked rubber composition after vulcanization were evaluated.

Specifically, evaluation was made by the following methods.

The results are shown in Table 13 to Table 18.

(Evaluation of processability of blended product (cohesiveness of rubber composition))

Evaluation was made with cohesiveness of a kneaded product generated in formation of a blended product at the first state in the kneading method, as an index of processability in formation of the blended product.

A rubber composition discharged from a sealed mixer is preferably a cohesive rubber composition, and such a rubber composition, if approximately a powder, causes inferior processability, and any loss in a production process and/or elongation in production time, resulting in deterioration in productivity. In addition, insufficient kneading does not allow for sufficient dispersion of a filler and can deteriorate physical properties.

From the above viewpoints, a case where the mass ratio of a granulate or particulate product of 1 $cm^2$ or less, in a rubber composition discharged from a sealed mixer, was less than 3% by mass was determined to allow favorable processability to be exhibited, and thus was evaluated as O, a case where the mass ratio of the granulate or particulate product was 3% by mass or more and 10% by mass or less was determined to allow processability to have no problems in practical use, and thus was evaluated as △, and a case where the mass ratio of the granulate or particulate product was more than 10% by mass was determined to cause deterioration in processability and thus was evaluated as X.

(Evaluation of physical properties of blended product)

The Mooney viscosity of the rubber composition before vulcanization, and the tensile strength, tensile elongation, 300% modulus, compression set, static spring constant, dynamic spring constant, and dynamic magnification of the crosslinked rubber composition, described below, in Examples 1 and 2 and Comparative Example 2, were converted into index numbers under the assumption that each of the evaluation results in Comparative Example 1 was 100, and were shown in Table 13.

Those in Examples 3 to 14, Examples 27 to 34 and Comparative Examples 4 to 9 were converted into index numbers under the assumption that each of the evaluation results in Comparative Example 3 was 100, and were shown in Table 14 to Table 18.

The Mooney viscosity was more favorable as the index number was higher, and it was determined that, when was compared with the reference, a value of 70 or more caused no problems in practical use, a value of 85 or more was preferable, and a value of 105 or more had superiority.

Each of properties except for the Mooney viscosity was also more favorable as the index number was higher, and it was determined that, when was compared with the reference, a value of 85 or more caused no problems in practical use and a value of 105 or more had superiority.

The values of the shore A hardness and the change in hardness before and after heating (the expression (1): change in shore A hardness after heating under air at 100°C for 72 hours compared with that before the heating) of the following crosslinked rubber composition, as measured by methods described below, were described. The change in shore A hardness after heating compared with that before the heating was determined as causing no problems in practical use when satisfied the expression (1), and was determined as causing any problem in practical use when did not satisfy the expression (1).

<Tensile characteristics>

Tensile characteristics were evaluated with the product obtained by multiplying the tensile strength and the tensile elongation of the crosslinked rubber composition, described below. It was determined that, as the values of tensile characteristics were higher, the balance between the tensile strength and the tensile elongation could be improved and a material high in strength was achieved.

Tensile characteristics in Examples 1 and 2 and Comparative Example 2 were converted into index numbers under the assumption that each of the evaluation results in Comparative Example 1 was 100, and were shown in Table 13.

Tensile characteristics in Examples 3 to 14, Examples 27 to 34 and Comparative Examples 4 to 9 were converted into index numbers under the assumption that each of the evaluation results in Comparative Example 3 was 100, and were shown in Table 14 to Table 18.

It was determined that a value equal to or more than the reference value (100) was preferable, a value of 85 or more and 100 or less caused no problems in practical use, a value of 75 or more and less than 85 sometimes caused material strength which was not sufficient depending on the intended use, and a value of less than 75 caused insufficient material strength.

<Mooney viscosity of rubber composition>

The Mooney viscosity of a rubber composition before vulcanization was measured as an index of processability, according to JIS K6300 (ISO289-1) and ISO289-4.

The measurement temperature was 100°C. First, each specimen was preheated for 1 minute, thereafter a rotor was rotated at 2 rpm, and the torque after 4 minutes was measured and defined as the Mooney viscosity ($ML_{(1+4)}$). The measurement equipment used was a Mooney viscometer (trade name "VR1132" manufactured by Ueshima Seisakusho Co., Ltd.).

<Tensile strength, tensile elongation, tensile characteristics, and 300% modulus>

The tensile strength and tensile elongation, and the 300% modulus of the crosslinked rubber composition after vulcanization were measured according to a tensile test method of JIS K6251. Evaluation of tensile characteristics was performed by the above method.

The measurement equipment used was AUTOGRAPH AGS-X manufactured by Shimadzu Corporation.

<Shore A hardness before heating>

The shore A hardness (Type A of durometer) of a sheet was measured according to JIS K 6253-3, by a test

piece having a thickness of about 12 mm, obtained by stacking flat portions of six 2-mm sheets of the crosslinked rubber composition, each of the sheets having a flat and smooth surface.

Here, any test piece having foreign substances incorporated, any test piece having air bubbles, and any test piece having scratches were not used.

The dimension of a measurement surface of the test piece was a dimension enabling a press needle tip to perform measurement at a position of 12 mm or more apart from an end of the test piece.

<Change in shore A hardness after heating compared with that before the heating>

The test piece used in the measurement of the hardness before heating was adopted and heated under air at 100°C and ordinary pressure for 72 hours, thereby obtaining a test piece of the crosslinked rubber composition after heating. The shore A hardness was measured by the same method as the method for measuring the shore A hardness before heating.

The value by subtraction of the shore A hardness before heating from the shore A hardness after heating obtained in this measurement was calculated.

<Difference in storage elastic modulus>

The viscoelasticity parameter of the crosslinked rubber composition was measured in a torsional mode with a viscoelasticity tester "ARES" manufactured by Rheometric Scientific, Inc.

The value of the difference obtained by subtracting the storage elastic modulus measured at 50°C, a frequency of 10 Hz and a strain of 0.1% from the storage elastic modulus measured at 50°C, a frequency of 10 Hz and a strain of 3% was calculated.

flexibility at low temperature>

The viscoelasticity parameter of the crosslinked rubber composition was measured in a torsional mode with a viscoelasticity tester "ARES" manufactured by Rheometric Scientific, Inc., according to JIS K 6394, by use of a crosslinked rubber composition sheet having a thickness of 3 mm.

The ratio ($G'_{(-20°C)}/G'_{(-100°C)} \times 100$) of the storage elastic modulus (G' (-20°C)) measured at -20°C, a frequency of 10 Hz and a strain of 1% to the storage elastic modulus (G' (-100°C)) measured at -100°C, a frequency of 10 Hz and a strain of 1% was calculated.

<Compression set>

The compression set of the crosslinked rubber composition was measured according to JIS K6262.

<Static spring constant, dynamic spring constant, and dynamic magnification>

The static spring constant and dynamic spring constant of the crosslinked rubber composition were measured according to JIS K6385, and the dynamic magnification (Dynamic spring constant/Static spring constant) was calculated.

The measurement equipment used was ACUMEN3 manufactured by MTS Systems.

<Heat resistance>

The crosslinked rubber composition used in the above measurement of the tensile strength and the like was punched, and heated at 100°C and ordinary pressure for 72 hours, and the crosslinked rubber composition after heating was subjected to measurement of tensile strength and tensile elongation, according to a tensile test method of JIS K6251.

The product of the tensile strength and the tensile elongation of the crosslinked rubber composition after heating was calculated under the assumption that the product of the tensile strength and the tensile elongation of the crosslinked rubber composition not heated was 100.

The heat resistance was evaluated as follows: the heat resistance was less degraded by heating and more excellent as the numerical value was larger, and the heat resistance was highly degraded by heating and more inferior as the numerical value was smaller.

The values in Comparative Example 2 and Examples 1 and 2 were compared with those in Comparative Example 1 and the values in Examples 3 to 14, Examples 27 to 34, and Comparative Examples 4 to 9 were compared with those in Comparative Example 3, and it was determined that a value of -5 or more and less than +10 exhibited equivalent heat resistance, a value of more than +10 exhibited superiority with respect to the heat resistance, and a

value of less than -5 exhibited inferior heat resistance.

((Blending conditions 2) Examples 15 to 26, Examples 35 to 42 and 49, and Comparative Examples 10 to 17)

· Rubber component (A) (Polymers 1 to 25 of Polymerization Examples 1 to 25, RSS No. 3 as natural rubber, U150 (trade name, manufactured by UBE Elastomer Co., Ltd.) as BR, and EP33 (trade name, manufactured by ENEOS Materials Corporation) as EPDM): 100 parts by mass

The amount of addition of each blending agent described below was expressed by the number of parts by mass based on 100 parts by mass of the rubber component (A) including no softener for rubber, and was shown in Table 19 to Table 22.

- Carbon black (B) (trade name "Seast KH (N339)" manufactured by Tokai Carbon Co., Ltd.)
- Anti-aging agent: 2-mercaptobenzimidazole
- Naphthenic oil
- Zinc flower
- Stearic acid
- Crosslinker (C) organic peroxide (dicumyl peroxide)

<Kneading method>

The above materials were kneaded by the following method to obtain a rubber composition.

A sealed kneading machine (interior volume 0.3 L) equipped with a temperature control apparatus was used to knead the rubber component, filler (carbon black), naphthenic oil, zinc flower, stearic acid and anti-aging agent at a filling degree of 65% and a number of rotor rotations of 30 to 50 rpm, as the first stage kneading.

The temperature of the sealed kneading machine was here controlled and a blended product at the first stage was obtained at a discharge temperature of 125 to 130°C.

After cooling, organic peroxide was added and kneaded in an open roll set at 35°C, as the second stage kneading. Thereafter, the resultant was molded, and crosslinked with press at 170°C for a predetermined time described in Table 19 to Table 22.

The rubber composition before crosslinking and the crosslinked rubber composition after crosslinking were evaluated. Specifically, evaluation was made by the following methods.

The evaluation results are shown in Table 23 to Table 26.

(Evaluation of processability of rubber composition (cohesiveness of rubber composition))

Evaluation was made by the same evaluation method as the above evaluation of processability of the rubber composition (cohesiveness of the rubber composition).

(Evaluation of physical properties of blended product)

Evaluation was made under the same conditions as those with respect to the Mooney viscosity of the rubber composition, and the tensile strength, tensile elongation, 300% modulus, compression set, static spring constant and dynamic spring constant of the crosslinked rubber composition, described above. The dynamic magnification was determined from the ratio of Dynamic spring constant/Static spring constant.

The results in Examples 15 and 16 and Comparative Example 11 were converted into index numbers under the assumption that each of the evaluation results in Comparative Example 10 was 100, and were shown in Table 23.

The results in Examples 17 to 26, Examples 35 to 42 and Example 49, and Comparative Examples 13 to 17 were converted into index numbers under the assumption that each of the evaluation results in Comparative Example 12 was 100, and were shown in Table 24 to Table 26.

The Mooney viscosity was more favorable as the index number was higher, and it was determined that, when was compared with the reference, a value of 70 or more caused no problems in practical use, a value of 85 or more was preferable, and a value of 105 or more had superiority.

Each of properties except for the Mooney viscosity was also more favorable as the index number was higher, and it was determined that, when was compared with the reference, a value of 85 or more caused no problems in practical use and a value of 105 or more had superiority.

The values of the shore A hardness and the change in hardness before and after heating (the expression (1): change in shore A hardness after heating under air at 100°C for 72 hours compared with that before the heating) of the crosslinked rubber composition, as measured by the above methods, were described. The change in shore A hardness

after heating compared with that before the heating was evaluated as causing no problems in practical use when satisfied the expression (1), and was evaluated as causing any problem in practical use when did not satisfy the expression (1).

<Tensile characteristics>

Tensile characteristics were evaluated with the product obtained by multiplying the tensile strength and the tensile elongation of the crosslinked rubber composition, as in tensile characteristics described above. It was determined that, as the values of tensile characteristics were higher, the balance between the tensile strength and the tensile elongation could be improved and a material high in strength was achieved.

Tensile characteristics in Examples 15 and 16 and Comparative Example 11 were converted into index numbers under the assumption that each of the evaluation results in Comparative Example 10 was 100, and were shown in Table 23.

Tensile characteristics in Examples 17 to 26, Examples 35 to 42, Example 49 and Comparative Examples 13 to 17 were converted into index numbers under the assumption that each of the evaluation results in Comparative Example 12 was 100, and were shown in Table 24 to Table 26.

It was determined that a value equal to or more than the reference value (100) was preferable, a value of 85 or more and 100 or less caused no problems in practical use, a value of 75 or more and less than 85 sometimes caused material strength which was not sufficient depending on the intended use, and a value of less than 75 caused insufficient material strength.

<Heat resistance>

It was determined with respect to the heat resistance that the heat resistance was less degraded by heating and more excellent as the numerical value was larger, and the heat resistance was highly degraded by heating and more inferior as the numerical value was smaller.

The values in Comparative Example 11, and Examples 15 and 16 were compared with those in Comparative Example 10 and the values in Examples 17 to 26, Examples 35 to 42, Example 49, and Comparative Examples 13 to 17 were compared with those in Comparative Example 12, and it was determined that a value of -5 or more and less than +10 exhibited equivalent heat resistance, a value higher by +10 or more exhibited superiority with respect to the heat resistance, and a value of less than -5 exhibited inferior heat resistance.

The shore A hardness before heating, the change in shore A hardness after heating compared with that before the heating, the difference between storage elastic moduli, and the flexibility at low temperature were measured and evaluated by the same methods as described above.

[Table 7]

| | | Comparative Example 1 | Comparative Example 2 | Example 1 | Example 2 |
|---|---|---|---|---|---|
| Polymer 1 | parts by mass | | | | |
| Polymer 2 | parts by mass | | | | |
| Polymer 3 | parts by mass | | | 100 | 40 |
| Polymer 4 | parts by mass | | | | |
| Polymer 5 | parts by mass | | | | |
| Polymer 6 | parts by mass | | | | |
| Polymer 7 | parts by mass | | | | |
| Polymer 8 | parts by mass | | | | |
| Polymer 9 | parts by mass | | | | |
| Polymer 10 | parts by mass | | | | |
| Polymer 11 | parts by mass | | | | |
| Polymer 12 | parts by mass | | | | |
| Polymer 13 | parts by mass | | | | |
| Polymer 14 | parts by mass | | | | |

(continued)

| | | Comparative Example 1 | Comparative Example 2 | Example 1 | Example 2 |
|---|---|---|---|---|---|
| Polymer 15 | parts by mass | | | | |
| Polymer 16 | parts by mass | | | | |
| Polymer 17 | parts by mass | | | | |
| Polymer 18 | parts by mass | | | | |
| Polymer 19 | parts by mass | | | | |
| Polymer 20 | parts by mass | | | | |
| Polymer 21 | parts by mass | | | | |
| Polymer 22 | parts by mass | | | | |
| Polymer 23 | parts by mass | | | | |
| Polymer 24 | parts by mass | | | | |
| Natural rubber | parts by mass | 100 | | | |
| EDPM | parts by mass | | 100 | | 60 |
| BR | parts by mass | | | | |
| Iodine value of rubber component A | I g/100 g | 373 | 8 | 95 | 43 |
| Naphthenic oil | parts by mass | 10 | 10 | 10 | 10 |
| Carbon black | parts by mass | 30 | 30 | 30 | 30 |
| Stearic acid | parts by mass | 1 | 1 | 1 | 1 |
| Zinc flower | parts by mass | 5 | 5 | 5 | 5 |
| Anti-aging agent | parts by mass | 2 | 2 | 2 | 2 |
| Sulfur | parts by mass | 0.5 | 0.5 | 0.5 | 0.5 |
| Vulcanization accelerator 1 | parts by mass | 1.7 | 1.7 | 1.7 | 1.7 |
| Vulcanization accelerator 2 | parts by mass | 1.7 | 1.7 | 1.7 | 1.7 |
| Crosslinking time | min | 10 | 20 | 20 | 20 |

[Table 8]

| | | Comparative Example 3 | Comparative Example 4 | Example 3 | Example 4 | Example 5 |
|---|---|---|---|---|---|---|
| Polymer 1 | parts by mass | | 40 | | | |
| Polymer 2 | parts by mass | | | 40 | | |
| Polymer 3 | parts by mass | | | | 40 | |
| Polymer 4 | parts by mass | | | | | 40 |
| Polymer 5 | parts by mass | | | | | |
| Polymer 6 | parts by mass | | | | | |
| Polymer 7 | parts by mass | | | | | |
| Polymer 8 | parts by mass | | | | | |
| Polymer 9 | parts by mass | | | | | |
| Polymer 10 | parts by mass | | | | | |

(continued)

| | | Comparative Example 3 | Comparative Example 4 | Example 3 | Example 4 | Example 5 |
|---|---|---|---|---|---|---|
| Polymer 11 | parts by mass | | | | | |
| Polymer 12 | parts by mass | | | | | |
| Polymer 13 | parts by mass | | | | | |
| Polymer 14 | parts by mass | | | | | |
| Polymer 15 | parts by mass | | | | | |
| Polymer 16 | parts by mass | | | | | |
| Polymer 17 | parts by mass | | | | | |
| Polymer 18 | parts by mass | | | | | |
| Polymer 19 | parts by mass | | | | | |
| Polymer 20 | parts by mass | | | | | |
| Polymer 21 | parts by mass | | | | | |
| Polymer 22 | parts by mass | | | | | |
| Polymer 23 | parts by mass | | | | | |
| Polymer 24 | parts by mass | | | | | |
| Natural rubber | parts by mass | 60 | 60 | 60 | 60 | 60 |
| EDPM | parts by mass | 40 | | | | |
| BR | parts by mass | | | | | |
| Iodine value of rubber component A | I g/100 g | 227 | 397 | 284 | 262 | 232 |
| Naphthenic oil | parts by mass | 10 | 10 | 10 | 10 | 10 |
| Carbon black | parts by mass | 30 | 30 | 30 | 30 | 30 |
| Stearic acid | parts by mass | 1 | 1 | 1 | 1 | 1 |
| Zinc flower | parts by mass | 5 | 5 | 5 | 5 | 5 |
| Anti-aging agent | parts by mass | 2 | 2 | 2 | 2 | 2 |
| Sulfur | parts by mass | 0.5 | 0.5 | 0.5 | 0.5 | 0.5 |
| Vulcanization accelerator 1 | parts by mass | 1.7 | 1.7 | 1.7 | 1.7 | 1.7 |
| Vulcanization accelerator 2 | parts by mass | 1.7 | 1.7 | 1.7 | 1.7 | 1.7 |
| Crosslinking time | min | 10 | 10 | 10 | 10 | 10 |

[Table 9]

| | | Example 6 | Example 7 | Example 8 | Example 9 | Comparative Example 5 |
|---|---|---|---|---|---|---|
| Polymer 1 | parts by mass | | | | | |
| Polymer 2 | parts by mass | | | | | |
| Polymer 3 | parts by mass | | | | | |
| Polymer 4 | parts by mass | | | | | |
| Polymer 5 | parts by mass | 40 | | | | |
| Polymer 6 | parts by mass | | 40 | | | |

(continued)

| | | Example 6 | Example 7 | Example 8 | Example 9 | Comparative Example 5 |
|---|---|---|---|---|---|---|
| Polymer 7 | parts by mass | | | 40 | | |
| Polymer 8 | parts by mass | | | | 40 | |
| Polymer 9 | parts by mass | | | | | 40 |
| Polymer 10 | parts by mass | | | | | |
| Polymer 11 | parts by mass | | | | | |
| Polymer 12 | parts by mass | | | | | |
| Polymer 13 | parts by mass | | | | | |
| Polymer 14 | parts by mass | | | | | |
| Polymer 15 | parts by mass | | | | | |
| Polymer 16 | parts by mass | | | | | |
| Polymer 17 | parts by mass | | | | | |
| Polymer 18 | parts by mass | | | | | |
| Polymer 19 | parts by mass | | | | | |
| Polymer 20 | parts by mass | | | | | |
| Polymer 21 | parts by mass | | | | | |
| Polymer 22 | parts by mass | | | | | |
| Polymer 23 | parts by mass | | | | | |
| Polymer 24 | parts by mass | | | | | |
| Natural rubber | parts by mass | 60 | 60 | 60 | 60 | 60 |
| EDPM | parts by mass | | | | | |
| BR | parts by mass | | | | | |
| Iodine value of rubber component A | I g/100 g | 262 | 262 | 262 | 262 | 363 |
| Naphthenic oil | parts by mass | 10 | 10 | 10 | 10 | 10 |
| Carbon black | parts by mass | 30 | 30 | 30 | 30 | 30 |
| Stearic acid | parts by mass | 1 | 1 | 1 | 1 | 1 |
| Zinc flower | parts by mass | 5 | 5 | 5 | 5 | 5 |
| Anti-aging agent | parts by mass | 2 | 2 | 2 | 2 | 2 |
| Sulfur | parts by mass | 0.5 | 0.5 | 0.5 | 0.5 | 0.5 |
| Vulcanization accelerator 1 | parts by mass | 1.7 | 1.7 | 1.7 | 1.7 | 1.7 |
| Vulcanization accelerator 2 | parts by mass | 1.7 | 1.7 | 1.7 | 1.7 | 1.7 |
| Crosslinking time | min | 10 | 10 | 10 | 10 | 10 |

[Table 10]

| | | Example 10 | Comparative Example 6 | Example 11 | Comparative Example 7 | Comparative Example 8 |
|---|---|---|---|---|---|---|
| Polymer 1 | parts by mass | | | | | |
| Polymer 2 | parts by mass | | | | | |

(continued)

| | | Example 10 | Comparative Example 6 | Example 11 | Comparative Example 7 | Comparative Example 8 |
|---|---|---|---|---|---|---|
| Polymer 3 | parts by mass | | | 20 | | 40 |
| Polymer 4 | parts by mass | | | | | |
| Polymer 5 | parts by mass | | | | | |
| Polymer 6 | parts by mass | | | | | |
| Polymer 7 | parts by mass | | | | | |
| Polymer 8 | parts by mass | | | | | |
| Polymer 9 | parts by mass | | | | | |
| Polymer 10 | parts by mass | 40 | | | | |
| Polymer 11 | parts by mass | | 40 | | | |
| Polymer 12 | parts by mass | | | | 40 | |
| Polymer 13 | parts by mass | | | | | |
| Polymer 14 | parts by mass | | | | | |
| Polymer 15 | parts by mass | | | | | |
| Polymer 16 | parts by mass | | | | | |
| Polymer 17 | parts by mass | | | | | |
| Polymer 18 | parts by mass | | | | | |
| Polymer 19 | parts by mass | | | | | |
| Polymer 20 | parts by mass | | | | | |
| Polymer 21 | parts by mass | | | | | |
| Polymer 22 | parts by mass | | | | | |
| Polymer 23 | parts by mass | | | | | |
| Polymer 24 | parts by mass | | | | | |
| Natural rubber | parts by mass | 60 | 60 | 70 | 60 | 60 |
| EDPM | parts by mass | | | | | |
| BR | parts by mass | | | 10 | | |
| Iodine value of rubber component A | I g/100 g | 254 | 259 | 327 | 269 | 262 |
| Naphthenic oil | parts by mass | 10 | 10 | 10 | 10 | 10 |
| Carbon black | parts by mass | 30 | 30 | 30 | 30 | 30 |
| Stearic acid | parts by mass | 1 | 1 | 1 | 1 | 1 |
| Zinc flower | parts by mass | 5 | 5 | 5 | 5 | 5 |
| Anti-aging agent | parts by mass | 2 | 2 | 2 | 2 | 2 |
| Sulfur | parts by mass | 0.5 | 0.5 | 0.5 | 0.5 | 3 |
| Vulcanization accelerator 1 | parts by mass | 1.7 | 1.7 | 1.7 | 1.7 | 1.7 |
| Vulcanization accelerator 2 | parts by mass | 1.7 | 1.7 | 1.7 | 1.7 | 1.7 |
| Crosslinking time | min | 10 | 10 | 10 | 10 | 30 |

[Table 11]

| | | Example 12 | Example 13 | Example 14 | Comparative Example 9 | Example 27 | Example 28 |
|---|---|---|---|---|---|---|---|
| Polymer 1 | parts by mass | | | | | | |
| Polymer 2 | parts by mass | | | | | | |
| Polymer 3 | parts by mass | | | | | | |
| Polymer 4 | parts by mass | | | | | | |
| Polymer 5 | parts by mass | | | | | | |
| Polymer 6 | parts by mass | | | | | | |
| Polymer 7 | parts by mass | | | | | | |
| Polymer 8 | parts by mass | | | | | | |
| Polymer 9 | parts by mass | | | | | | |
| Polymer 10 | parts by mass | | | | | | |
| Polymer 11 | parts by mass | | | | | | |
| Polymer 12 | parts by mass | | | | | | |
| Polymer 13 | parts by mass | 40 | | | | | |
| Polymer 14 | parts by mass | | 40 | | | | |
| Polymer 15 | parts by mass | | | 40 | | | |
| Polymer 16 | parts by mass | | | | 40 | | |
| Polymer 17 | parts by mass | | | | | 40 | |
| Polymer 18 | parts by mass | | | | | | 40 |
| Polymer 19 | parts by mass | | | | | | |
| Polymer 20 | parts by mass | | | | | | |
| Polymer 21 | parts by mass | | | | | | |
| Polymer 22 | parts by mass | | | | | | |
| Polymer 23 | parts by mass | | | | | | |
| Polymer 24 | parts by mass | | | | | | |
| Natural rubber | parts by mass | 60 | 60 | 60 | 60 | 60 | 60 |
| EDPM | parts by mass | | | | | | |
| BR | parts by mass | | | | | | |
| Iodine value of rubber component A | I g/100 g | 251 | 238 | 272 | 331 | 259 | 259 |
| Naphthenic oil | parts by mass | 10 | 10 | 10 | 10 | 10 | 10 |
| Carbon black | parts by mass | 30 | 30 | 30 | 30 | 30 | 30 |
| Stearic acid | parts by mass | 1 | 1 | 1 | 1 | 1 | 1 |
| Zinc flower | parts by mass | 5 | 5 | 5 | 5 | 5 | 5 |
| Anti-aging agent | parts by mass | 2 | 2 | 2 | 2 | 2 | 2 |
| Sulfur | parts by mass | 0.5 | 0.5 | 0.5 | 0.5 | 0.5 | 0.5 |
| Vulcanization accelerator 1 | parts by mass | 1.7 | 1.7 | 1.7 | 1.7 | 1.7 | 1.7 |
| Vulcanization accelerator 2 | parts by mass | 1.7 | 1.7 | 1.7 | 1.7 | 1.7 | 1.7 |
| Crosslinking time | min | 10 | 10 | 10 | 10 | 10 | 10 |

[Table 12]

| | | Example 29 | Example 30 | Example 31 | Example 32 | Example 33 | Example 34 |
|---|---|---|---|---|---|---|---|
| Polymer 1 | parts by mass | | | | | | |
| Polymer 2 | parts by mass | | | | | | |
| Polymer 3 | parts by mass | | | | | | |
| Polymer 4 | parts by mass | | | | | | |
| Polymer 5 | parts by mass | | | | | | |
| Polymer 6 | parts by mass | | | | | | |
| Polymer 7 | parts by mass | | | | | | |
| Polymer 8 | parts by mass | | | | | | |
| Polymer 9 | parts by mass | | | | | | |
| Polymer 10 | parts by mass | | | | | | |
| Polymer 11 | parts by mass | | | | | | |
| Polymer 12 | parts by mass | | | | | | |
| Polymer 13 | parts by mass | | | | | | |
| Polymer 14 | parts by mass | | | | | | |
| Polymer 15 | parts by mass | | | | | | |
| Polymer 16 | parts by mass | | | | | | |
| Polymer 17 | parts by mass | | | | | | |
| Polymer 18 | parts by mass | | | | | | |
| Polymer 19 | parts by mass | 40 | | | | | |
| Polymer 20 | parts by mass | | 40 | | | | |
| Polymer 21 | parts by mass | | | 40 | | | |
| Polymer 22 | parts by mass | | | | 40 | | |
| Polymer 23 | parts by mass | | | | | 40 | |
| Polymer 24 | parts by mass | | | | | | 40 |
| Natural rubber | parts by mass | 60 | 60 | 60 | 60 | 60 | 60 |
| EDPM | parts by mass | | | | | | |
| BR | parts by mass | | | | | | |
| Iodine value of rubber component A | I g/100 g | 259 | 259 | 305 | 288 | 246 | 246 |
| Naphthenic oil | parts by mass | 10 | 10 | 10 | 10 | 10 | 10 |
| Carbon black | parts by mass | 30 | 30 | 30 | 30 | 30 | 30 |
| Stearic acid | parts by mass | 1 | 1 | 1 | 1 | 1 | 1 |
| Zinc flower | parts by mass | 5 | 5 | 5 | 5 | 5 | 5 |
| Anti-aging agent | parts by mass | 2 | 2 | 2 | 2 | 2 | 2 |
| Sulfur | parts by mass | 0.5 | 0.5 | 0.5 | 0.5 | 0.5 | 0.5 |
| Vulcanization accelerator 1 | parts by mass | 1.7 | 1.7 | 1.7 | 1.7 | 1.7 | 1.7 |
| Vulcanization accelerator 2 | parts by mass | 1.7 | 1.7 | 1.7 | 1.7 | 1.7 | 1.7 |
| Crosslinking time | min | 10 | 10 | 10 | 10 | 10 | 10 |

[Table 13]

| | | Comparative Example 1 | Comparative Example 2 | Example 1 | Example 2 |
|---|---|---|---|---|---|
| Mooney viscosity of rubber composition before vulcanization | INDEX | 100 | 121 | 96 | 94 |
| Cohesiveness of rubber composition | | ○ | ○ | ○ | ○ |
| Shore A hardness of crosslinked rubber composition | | 63 | 54 | 68 | 67 |
| (Shore A hardness after heating) - (Shore A hardness before heating) | | -3 | -4 | -1 | -2 |
| Difference in storage elastic modulus | MPa | 4.8 | 12.2 | 4.1 | 7.9 |
| Tensile strength | INDEX | 100 | 62 | 86 | 87 |
| Tensile elongation | INDEX | 100 | 94 | 92 | 90 |
| Tensile characteristics | INDEX | 100 | 58 | 79 | 78 |
| 300% modulus | INDEX | 100 | 65 | 98 | 100 |
| Compression set | INDEX | 100 | 86 | 90 | 92 |
| Static spring constant | INDEX | 100 | 141 | 130 | 119 |
| Dynamic spring constant | INDEX | 100 | 54 | 84 | 90 |
| Dynamic magnification | INDEX | 100 | 76 | 109 | 107 |
| Heat resistance | | 51 | 85 | 73 | 85 |
| Flexibility at low temperature | | 0.13 | 0.78 | 0.31 | 0.42 |

[Table 14]

| | | Comparative Example 3 | Comparative Example 4 | Example 3 | Example 4 | Example 5 |
|---|---|---|---|---|---|---|
| Mooney viscosity of rubber composition before vulcanization | INDEX | 100 | 103 | 95 | 92 | 90 |
| Cohesiveness of rubber composition | | ○ | ○ | ○ | ○ | △ |
| Shore A hardness of crosslinked rubber composition | | 60 | 64 | 65 | 68 | 70 |
| (Shore A hardness after heating) - (Shore A hardness before heating) | | -5 | 3 | -2 | -1 | -1 |
| Difference in storage elastic modulus | MPa | 6.9 | 4.4 | 4.5 | 4.7 | 4.6 |
| Tensile strength | INDEX | 100 | 99 | 103 | 107 | 108 |
| Tensile elongation | INDEX | 100 | 101 | 95 | 87 | 85 |
| Tensile characteristics | INDEX | 100 | 100 | 98 | 93 | 92 |
| 300% modulus | INDEX | 100 | 105 | 114 | 131 | 140 |
| Compression set | INDEX | 100 | 121 | 107 | 105 | 103 |
| Static spring constant | INDEX | 100 | 98 | 106 | 109 | 112 |

(continued)

| | | Comparative Example 3 | Comparative Example 4 | Example 3 | Example 4 | Example 5 |
|---|---|---|---|---|---|---|
| Dynamic spring constant | INDEX | 100 | 100 | 105 | 103 | 101 |
| Dynamic magnification | INDEX | 100 | 98 | 111 | 112 | 113 |
| Heat resistance | | 67 | 50 | 65 | 69 | 76 |
| Flexibility at low temperature | | 0.27 | 0.34 | 0.27 | 0.34 | 0.65 |

[Table 15]

| | | Example 6 | Example 7 | Example 8 | Example 9 | Comparative Example 5 |
|---|---|---|---|---|---|---|
| Mooney viscosity of rubber composition before vulcanization | INDEX | 83 | 86 | 93 | 84 | 110 |
| Cohesiveness of rubber composition | | Δ | Δ | ○ | Δ | ○ |
| Shore A hardness of crosslinked rubber composition | | 68 | 69 | 69 | 70 | 60 |
| (Shore A hardness after heating) - (Shore A hardness before heating) | | 1 | 1 | -2 | -2 | -6 |
| Difference in storage elastic modulus | MPa | 2.8 | 3.6 | 4.3 | 4.5 | 5.3 |
| Tensile strength | INDEX | 115 | 112 | 106 | 110 | 108 |
| Tensile elongation | INDEX | 85 | 91 | 90 | 87 | 107 |
| Tensile characteristics | INDEX | 98 | 102 | 95 | 96 | 116 |
| 300% modulus | INDEX | 133 | 131 | 128 | 127 | 96 |
| Compression set | INDEX | 110 | 108 | 101 | 101 | 117 |
| Static spring constant | INDEX | 113 | 110 | 110 | 107 | 94 |
| Dynamic spring constant | INDEX | 101 | 101 | 104 | 102 | 102 |
| Dynamic magnification | INDEX | 114 | 111 | 114 | 109 | 96 |
| Heat resistance | | 65 | 68 | 71 | 69 | 49 |
| Flexibility at low temperature | | 0.34 | 0.29 | 0.32 | 0.38 | 4.91 |

[Table 16]

| | | Example 10 | Comparative Example 6 | Example 11 | Comparative Example 7 | Comparative Example 8 |
|---|---|---|---|---|---|---|
| Mooney viscosity of rubber composition before vulcanization | INDEX | 99 | 87 | 94 | 73 | 92 |
| Cohesiveness of rubber composition | | ○ | ○ | ○ | ○ | ○ |
| Shore A hardness of crosslinked rubber composition | | 63 | 67 | 68 | 73 | 70 |

(continued)

| | | Example 10 | Comparative Example 6 | Example 11 | Comparative Example 7 | Comparative Example 8 |
|---|---|---|---|---|---|---|
| (Shore A hardness after heating) - (Shore A hardness before heating) | | -4 | -2 | -1 | -4 | -11 |
| Difference in storage elastic modulus | MPa | 5.3 | 4.4 | 4.6 | 15.7 | 5.9 |
| Tensile strength | INDEX | 120 | 101 | 117 | 119 | 113 |
| Tensile elongation | INDEX | 111 | 86 | 98 | 90 | 80 |
| Tensile characteristics | INDEX | 133 | 87 | 115 | 107 | 90 |
| 300% modulus | INDEX | 102 | 116 | 114 | 143 | 140 |
| Compression set | INDEX | 108 | 104 | 113 | 112 | 101 |
| Static spring constant | INDEX | 101 | 103 | 102 | 106 | 112 |
| Dynamic spring constant | INDEX | 117 | 96 | 103 | 93 | 93 |
| Dynamic magnification | INDEX | 118 | 99 | 105 | 99 | 104 |
| Heat resistance | | 67 | 68 | 63 | 64 | 54 |
| Flexibility at low temperature | | 4.02 | 0.32 | 0.22 | 0.28 | 0.25 |

[Table 17]

| | | Example 12 | Example 13 | Example 14 | Comparative Example 9 | Example 27 | Example 28 |
|---|---|---|---|---|---|---|---|
| Mooney viscosity of rubber composition before vulcanization | INDEX | 93 | 102 | 96 | 110 | 96 | 88 |
| Cohesiveness of rubber composition | | ○ | ○ | ○ | ○ | ○ | ○ |
| Shore A hardness of crosslinked rubber composition | | 70 | 58 | 68 | 56 | 69 | 69 |
| (Shore A hardness after heating) - (Shore A hardness before heating) | | -5 | -1 | -4 | -3 | -3 | -3 |
| Difference in storage elastic modulus | MPa | 15.2 | 3.1 | 4.6 | 3.6 | 4.2 | 4.1 |
| Tensile strength | INDEX | 113 | 103 | 102 | 93 | 104 | 107 |
| Tensile elongation | INDEX | 90 | 100 | 98 | 94 | 92 | 94 |
| Tensile characteristics | INDEX | 102 | 103 | 100 | 87 | 96 | 101 |
| 300% modulus | INDEX | 119 | 102 | 105 | 101 | 110 | 112 |
| Compression set | INDEX | 160 | 113 | 113 | 100 | 103 | 109 |
| Static spring constant | INDEX | 114 | 103 | 103 | 97 | 104 | 108 |
| Dynamic spring constant | INDEX | 90 | 99 | 110 | 98 | 102 | 104 |

(continued)

| | | Example 12 | Example 13 | Example 14 | Comparative Example 9 | Example 27 | Example 28 |
|---|---|---|---|---|---|---|---|
| Dynamic magnification | INDEX | 103 | 102 | 113 | 95 | 106 | 112 |
| Heat resistance | | 62 | 65 | 60 | 62 | 66 | 65 |
| Flexibility at low temperature | | 5.63 | 1.24 | 1.31 | 0.31 | 104 | 0.90 |

[Table 18]

| | | Example 29 | Example 30 | Example 31 | Example 32 | Example 33 | Example 34 |
|---|---|---|---|---|---|---|---|
| Mooney viscosity of rubber composition before vulcanization | INDEX | 80 | 76 | 92 | 89 | 79 | 84 |
| Cohesiveness of rubber composition | | Δ | × | ○ | ○ | Δ | Δ |
| Shore A hardness of crosslinked rubber composition | | 68 | 68 | 70 | 66 | 62 | 63 |
| (Shore A hardness after heating) - (Shore A hardness before heating) | | -3 | -3 | -5 | -5 | -7 | -7 |
| Difference in storage elastic modulus | MPa | 3.9 | 3.8 | 3.6 | 4.9 | 3.8 | 3.9 |
| Tensile strength | INDEX | 108 | 108 | 103 | 102 | 93 | 94 |
| Tensile elongation | INDEX | 95 | 96 | 90 | 93 | 94 | 92 |
| Tensile characteristics | INDEX | 103 | 104 | 93 | 95 | 87 | 86 |
| 300% modulus | INDEX | 113 | 113 | 110 | 107 | 104 | 107 |
| Compression set | INDEX | 118 | 117 | 120 | 102 | 113 | 104 |
| Static spring constant | INDEX | 110 | 110 | 106 | 106 | 103 | 103 |
| Dynamic spring constant | INDEX | 110 | 111 | 110 | 101 | 103 | 100 |
| Dynamic magnification | INDEX | 121 | 122 | 117 | 107 | 106 | 103 |
| Heat resistance | | 65 | 65 | 64 | 58 | 54 | 54 |
| Flexibility at low temperature | | 0.9 | 0.87 | 0.22 | 0.24 | 0.27 | 0.31 |

[Table 19]

| | | Comparative Example 10 | Comparative Example 11 | Example 15 | Example 16 |
|---|---|---|---|---|---|
| Polymer 1 | parts by mass | | | | |
| Polymer 2 | parts by mass | | | | |
| Polymer 3 | parts by mass | | | 100 | 40 |
| Polymer 4 | parts by mass | | | | |
| Polymer 5 | parts by mass | | | | |

(continued)

| | | Comparative Example 10 | Comparative Example 11 | Example 15 | Example 16 |
|---|---|---|---|---|---|
| Polymer 6 | parts by mass | | | | |
| Polymer 7 | parts by mass | | | | |
| Polymer 8 | parts by mass | | | | |
| Polymer 9 | parts by mass | | | | |
| Polymer 10 | parts by mass | | | | |
| Polymer 11 | parts by mass | | | | |
| Polymer 12 | parts by mass | | | | |
| Polymer 13 | parts by mass | | | | |
| Polymer 14 | parts by mass | | | | |
| Polymer 15 | parts by mass | | | | |
| Polymer 16 | parts by mass | | | | |
| Polymer 17 | parts by mass | | | | |
| Polymer 18 | parts by mass | | | | |
| Polymer 19 | parts by mass | | | | |
| Polymer 20 | parts by mass | | | | |
| Polymer 21 | parts by mass | | | | |
| Polymer 22 | parts by mass | | | | |
| Polymer 23 | parts by mass | | | | |
| Polymer 24 | parts by mass | | | | |
| Polymer 25 | parts by mass | | | | |
| Natural rubber | parts by mass | 100 | | | |
| EDPM | parts by mass | | 100 | | 60 |
| BR | parts by mass | | | | |
| Iodine value of rubber component A | I g/100 g | 373 | 8 | 95 | 43 |
| Naphthenic oil | parts by mass | 10 | 10 | 10 | 10 |
| Carbon black | parts by mass | 30 | 30 | 30 | 30 |
| Stearic acid | parts by mass | 1 | 1 | 1 | 1 |
| Zinc flower | parts by mass | 5 | 5 | 5 | 5 |
| Anti-aging agent | parts by mass | 2 | 2 | 2 | 2 |
| Organic peroxide | parts by mass | 3 | 3 | 3 | 3 |
| Crosslinking time | min | 20 | 20 | 20 | 20 |

[Table 20]

| | | Comparative Example 12 | Comparative Example 13 | Example 17 | Example 18 | Example 19 | Example 20 | Example 21 | Example 22 |
|---|---|---|---|---|---|---|---|---|---|
| Polymer 1 | parts by mass | | 40 | | | | | | |

(continued)

| | | Comparative Example 12 | Comparative Example 13 | Example 17 | Example 18 | Example 19 | Example 20 | Example 21 | Example 22 |
|---|---|---|---|---|---|---|---|---|---|
| Polymer 2 | parts by mass | | | 40 | | | | | |
| Polymer 3 | parts by mass | | | | 40 | | | | |
| Polymer 4 | parts by mass | | | | | 40 | | | |
| Polymer 5 | parts by mass | | | | | | 40 | | |
| Polymer 6 | parts by mass | | | | | | | 40 | |
| Polymer 7 | parts by mass | | | | | | | | 40 |
| Polymer 8 | parts by mass | | | | | | | | |
| Polymer 9 | parts by mass | | | | | | | | |
| Polymer 10 | parts by mass | | | | | | | | |
| Polymer 11 | parts by mass | | | | | | | | |
| Polymer 12 | parts by mass | | | | | | | | |
| Polymer 13 | parts by mass | | | | | | | | |
| Polymer 14 | parts by mass | | | | | | | | |
| Polymer 15 | parts by mass | | | | | | | | |
| Polymer 16 | parts by mass | | | | | | | | |

(continued)

| | | Comparative Example 12 | Comparative Example 13 | Example 17 | Example 18 | Example 19 | Example 20 | Example 21 | Example 22 |
|---|---|---|---|---|---|---|---|---|---|
| Polymer 17 | parts by mass | | | | | | | | |
| Polymer 18 | parts by mass | | | | | | | | |
| Polymer 19 | parts by mass | | | | | | | | |
| Polymer 20 | parts by mass | | | | | | | | |
| Polymer 21 | parts by mass | | | | | | | | |
| Polymer 22 | parts by mass | | | | | | | | |
| Polymer 23 | parts by mass | | | | | | | | |
| Polymer 24 | parts by mass | | | | | | | | |
| Polymer 25 | parts by mass | | | | | | | | |
| Natural rubber | parts by mass | 60 | 60 | 60 | 60 | 60 | 60 | 60 | 60 |
| EDPM | parts by mass | 40 | | | | | | | |
| BR | parts by mass | | | | | | | | |
| Iodine value of rubber component A | I g/100 g | 227 | 397 | 284 | 262 | 232 | 262 | 262 | 262 |
| Naphthenic oil | parts by mass | 10 | 10 | 10 | 10 | 10 | 10 | 10 | 10 |
| Carbon black | parts by mass | 30 | 30 | 30 | 30 | 30 | 30 | 30 | 30 |

(continued)

| | | Comparative Example 12 | Comparative Example 13 | Example 17 | Example 18 | Example 19 | Example 20 | Example 21 | Example 22 |
|---|---|---|---|---|---|---|---|---|---|
| Stearic acid | parts by mass | 1 | 1 | 1 | 1 | 1 | 1 | 1 | 1 |
| Zinc flower | parts by mass | 5 | 5 | 5 | 5 | 5 | 5 | 5 | 5 |
| Anti-aging agent | parts by mass | 2 | 2 | 2 | 2 | 2 | 2 | 2 | 2 |
| Organic peroxide | parts by mass | 3 | 3 | 3 | 3 | 3 | 3 | 3 | 3 |
| Crosslinking time | min | 20 | 20 | 20 | 20 | 20 | 20 | 20 | 20 |

[Table 21]

| | | Example 23 | Comparative Example 14 | Example 24 | Comparative Example 15 | Example 26 | Comparative Example 16 | Comparative Example 17 |
|---|---|---|---|---|---|---|---|---|
| Polymer 1 | parts by mass | | | | | | | |
| Polymer 2 | parts by mass | | | | | | | |
| Polymer 3 | parts by mass | | | | | 20 | | 40 |
| Polymer 4 | parts by mass | | | | | | | |
| Polymer 5 | parts by mass | | | | | | | |
| Polymer 6 | parts by mass | | | | | | | |
| Polymer 7 | parts by mass | | | | | | | |
| Polymer 8 | parts by mass | 40 | | | | | | |
| Polymer 9 | parts by mass | | 40 | | | | | |

(continued)

| | | Example 23 | Comparative Example 14 | Example 24 | Comparative Example 15 | Example 26 | Comparative Example 16 | Comparative Example 17 |
|---|---|---|---|---|---|---|---|---|
| Polymer 10 | parts by mass | | | 40 | | | | |
| Polymer 11 | parts by mass | | | | 40 | | | |
| Polymer 12 | parts by mass | | | | | | 40 | |
| Polymer 13 | parts by mass | | | | | | | |
| Polymer 14 | parts by mass | | | | | | | |
| Polymer 15 | parts by mass | | | | | | | |
| Polymer 16 | parts by mass | | | | | | | |
| Polymer 17 | parts by mass | | | | | | | |
| Polymer 18 | parts by mass | | | | | | | |
| Polymer 19 | parts by mass | | | | | | | |
| Polymer 20 | parts by mass | | | | | | | |
| Polymer 21 | parts by mass | | | | | | | |
| Polymer 22 | parts by mass | | | | | | | |
| Polymer 23 | parts by mass | | | | | | | |
| Polymer 24 | parts by mass | | | | | | | |

(continued)

| | | Example 23 | Comparative Example 14 | Example 24 | Comparative Example 15 | Example 26 | Comparative Example 16 | Comparative Example 17 |
|---|---|---|---|---|---|---|---|---|
| Polymer 25 | parts by mass | | | | | | | |
| Natural rubber | parts by mass | 60 | 60 | 60 | 60 | 70 | 60 | 60 |
| EDPM | parts by mass | | | | | | | |
| BR | parts by mass | | | | | 10 | | |
| Iodine value of rubber component A | I g/ 100 g | 262 | 363 | 254 | 259 | 327 | 269 | 262 |
| Naphthenic oil | parts by mass | 10 | 10 | 10 | 10 | 10 | 10 | 10 |
| Carbon black | parts by mass | 30 | 30 | 30 | 30 | 30 | 30 | 30 |
| Stearic acid | parts by mass | 1 | 1 | 1 | 1 | 1 | 1 | 1 |
| Zinc flower | parts by mass | 5 | 5 | 5 | 5 | 5 | 5 | 5 |
| Anti-aging agent | parts by mass | 2 | 2 | 2 | 2 | 2 | 2 | 2 |
| Organic peroxide | parts by mass | 3 | 3 | 3 | 3 | 3 | 3 | 8 |
| Crosslinking time | min | 20 | 20 | 20 | 20 | 20 | 20 | 5 |

[Table 22]

| | | Example 35 | Example 36 | Example 37 | Example 38 | Example 39 | Example 40 | Example 41 | Example 42 | Example 49 |
|---|---|---|---|---|---|---|---|---|---|---|
| Polymer 1 | parts by mass | | | | | | | | | |
| Polymer 2 | parts by mass | | | | | | | | | |

(continued)

| | | Example 35 | Example 36 | Example 37 | Example 38 | Example 39 | Example 40 | Example 41 | Example 42 | Example 49 |
|---|---|---|---|---|---|---|---|---|---|---|
| Polymer 3 | parts by mass | | | | | | | | | |
| Polymer 4 | parts by mass | | | | | | | | | |
| Polymer 5 | parts by mass | | | | | | | | | |
| Polymer 6 | parts by mass | | | | | | | | | |
| Polymer 7 | parts by mass | | | | | | | | | |
| Polymer 8 | parts by mass | | | | | | | | | |
| Polymer 9 | parts by mass | | | | | | | | | |
| Polymer 10 | parts by mass | | | | | | | | | |
| Polymer 11 | parts by mass | | | | | | | | | |
| Polymer 12 | parts by mass | | | | | | | | | |
| Polymer 13 | parts by mass | | | | | | | | | |
| Polymer 14 | parts by mass | | | | | | | | | |
| Polymer 15 | parts by mass | | | | | | | | | |
| Polymer 16 | parts by mass | | | | | | | | | |
| Polymer 17 | parts by mass | 40 | | | | | | | | |

(continued)

| | | Example 35 | Example 36 | Example 37 | Example 38 | Example 39 | Example 40 | Example 41 | Example 42 | Example 49 |
|---|---|---|---|---|---|---|---|---|---|---|
| Polymer 18 | parts by mass | | 40 | | | | | | | |
| Polymer 19 | parts by mass | | | 40 | | | | | | |
| Polymer 20 | parts by mass | | | | 40 | | | | | |
| Polymer 21 | parts by mass | | | | | 40 | | | | |
| Polymer 22 | parts by mass | | | | | | 40 | | | |
| Polymer 23 | parts by mass | | | | | | | 40 | | |
| Polymer 24 | parts by mass | | | | | | | | 40 | |
| Polymer 25 | parts by mass | | | | | | | | | 40 |
| Natural rubber | parts by mass | 60 | 60 | 60 | 60 | 60 | 60 | 60 | 60 | 60 |
| EDPM | parts by mass | | | | | | | | | |
| BR | parts by mass | | | | | | | | | |
| Iodine value of rubber component A | I g/100 g | 259 | 259 | 259 | 259 | 305 | 288 | 246 | 246 | 246 |
| Naphthenic oil | parts by mass | 10 | 10 | 10 | 10 | 10 | 10 | 10 | 10 | 10 |
| Carbon black | parts by mass | 30 | 30 | 30 | 30 | 30 | 30 | 30 | 30 | 30 |
| Stearic acid | parts by mass | 1 | 1 | 1 | 1 | 1 | 1 | 1 | 1 | 1 |

(continued)

| | | Example 35 | Example 36 | Example 37 | Example 38 | Example 39 | Example 40 | Example 41 | Example 42 | Example 49 |
|---|---|---|---|---|---|---|---|---|---|---|
| Zinc flower | parts by mass | 5 | 5 | 5 | 5 | 5 | 5 | 5 | 5 | 5 |
| Anti-aging agent | parts by mass | 2 | 2 | 2 | 2 | 2 | 2 | 2 | 2 | 2 |
| Organic peroxide | parts by mass | 3 | 3 | 3 | 3 | 3 | 3 | 3 | 3 | 3 |
| Crosslinking time | min | 20 | 20 | 20 | 20 | 20 | 20 | 20 | 20 | 20 |

[Table 23]

| | | Comparative Example 10 | Comparative Example 11 | Example 15 | Example 16 |
|---|---|---|---|---|---|
| Mooney viscosity of rubber composition before vulcanization | INDEX | 100 | 123 | 97 | 94 |
| Cohesiveness of rubber composition | | ○ | ○ | ○ | ○ |
| Shore A hardness of crosslinked rubber composition | | 64 | 57 | 68 | 66 |
| (Shore A hardness after heating) - (Shore A hardness before heating) | | -2 | -4 | -2 | -2 |
| Difference in storage elastic modulus | MPa | 5 | 12 | 4.5 | 6.3 |
| Tensile strength | INDEX | 100 | 86 | 93 | 97 |
| Tensile elongation | INDEX | 100 | 142 | 115 | 108 |
| Tensile characteristics | INDEX | 100 | 122 | 107 | 105 |
| 300% modulus | INDEX | 100 | 52 | 90 | 97 |
| Compression set | INDEX | 100 | 71 | 103 | 97 |
| Static spring constant | INDEX | 100 | 87 | 95 | 98 |
| Dynamic spring constant | INDEX | 100 | 73 | 96 | 94 |
| Dynamic magnification | INDEX | 100 | 64 | 91 | 92 |
| Heat resistance | | 53 | 76 | 70 | 75 |
| Flexibility at low temperature | | 0.11 | 0.69 | 0.28 | 0.39 |

[Table 24]

| | | Comparative Example 12 | Comparative Example 13 | Example 17 | Example 18 | Example 19 | Example 20 | Example 21 | Example 22 |
|---|---|---|---|---|---|---|---|---|---|
| Mooney viscosity of rubber composition before vulcanization | INDEX | 100 | 103 | 95 | 92 | 90 | 82 | 84 | 90 |
| Cohesiveness of rubber composition | | ○ | ○ | ○ | ○ | Δ | Δ | Δ | ○ |
| Shore A hardness of crosslinked rubber composition | | 60 | 64 | 66 | 68 | 68 | 68 | 70 | 67 |
| (Shore A hardness after heating) - (Shore A hardness before heating) | | -4 | 2 | -3 | -2 | -1 | 1 | 1 | -2 |
| Difference in storage elastic modulus | MPa | 5.9 | 4.5 | 4.7 | 4.8 | 4.6 | 3.1 | 3.7 | 4.3 |
| Tensile strength | INDEX | 100 | 100 | 100 | 104 | 106 | 110 | 110 | 105 |
| Tensile elongation | INDEX | 100 | 102 | 98 | 95 | 93 | 100 | 95 | 95 |
| Tensile characteristics | INDEX | 100 | 102 | 98 | 98 | 99 | 110 | 105 | 100 |
| 300% modulus | INDEX | 100 | 96 | 104 | 110 | 115 | 107 | 105 | 102 |
| Compression set | INDEX | 100 | 138 | 132 | 130 | 123 | 126 | 126 | 108 |
| Static spring constant | INDEX | 100 | 97 | 105 | 111 | 113 | 110 | 110 | 109 |
| Dynamic spring constant | INDEX | 100 | 100 | 110 | 116 | 116 | 113 | 110 | 111 |
| Dynamic magnification | INDEX | 100 | 97 | 116 | 129 | 131 | 124 | 121 | 121 |
| Heat resistance | | 60 | 49 | 62 | 64 | 68 | 64 | 65 | 64 |
| Flexibility at low temperature | | 0.26 | 0.31 | 0.27 | 0.32 | 0.60 | 0.32 | 0.29 | 0.32 |

[Table 25]

| | | Example 23 | Comparative Example 14 | Example 24 | Comparative Example 15 | Example 26 | Comparative Example 16 | Comparative Example 17 |
|---|---|---|---|---|---|---|---|---|
| Mooney viscosity of rubber composition before vulcanization | INDEX | 85 | 108 | 99 | 89 | 95 | 75 | 92 |
| Cohesiveness of rubber composition | | × | ○ | ○ | ○ | ○ | ○ | ○ |
| Shore A hardness of crosslinked rubber composition | | 67 | 59 | 63 | 67 | 68 | 73 | 52 |
| (Shore A hardness after heating) - (Shore A hardness before heating) | | -2 | -5 | -2 | -2 | 0 | -3 | 12 |
| Difference in storage elastic modulus | MPa | 4.2 | 5.0 | 5.3 | 4.8 | 4.7 | 17.1 | 20.7 |
| Tensile strength | INDEX | 103 | 99 | 101 | 102 | 114 | 118 | 83 |
| Tensile elongation | INDEX | 97 | 100 | 93 | 97 | 100 | 95 | 110 |
| Tensile characteristics | INDEX | 100 | 99 | 94 | 99 | 114 | 112 | 91 |
| 300% modulus | INDEX | 105 | 103 | 109 | 107 | 100 | 113 | 86 |
| Compression set | INDEX | 113 | 160 | 156 | 117 | 132 | 130 | 68 |
| Static spring constant | INDEX | 108 | 85 | 92 | 98 | 102 | 104 | 101 |
| Dynamic spring constant | INDEX | 107 | 109 | 124 | 100 | 106 | 92 | 96 |
| Dynamic magnification | INDEX | 116 | 93 | 110 | 98 | 108 | 96 | 97 |
| Heat resistance | | 63 | 50 | 65 | 63 | 58 | 60 | 105 |
| Flexibility at low temperature | | 0.36 | 4.68 | 3.71 | 0.27 | 0.16 | 0.28 | 0.28 |

[Table 26]

| | | Example 35 | Example 36 | Example 37 | Example 38 | Example 39 | Example 40 | Example 41 | Example 42 | Example 49 |
|---|---|---|---|---|---|---|---|---|---|---|
| Mooney viscosity of rubber composition before vulcanization | INDEX | 96 | 88 | 80 | 76 | 92 | 89 | 79 | 84 | 74 |
| Cohesiveness of rubber composition | | ○ | ○ | Δ | × | ○ | ○ | Δ | Δ | ○ |
| Shore A hardness of crosslinked rubber composition | | 69 | 69 | 68 | 68 | 70 | 66 | 62 | 63 | 71 |
| (Shore A hardness after heating) - (Shore A hardness before heating) | | -2 | -2 | -2 | -2 | -3 | -4 | -5 | -5 | -3 |
| Difference in storage elastic modulus | MPa | 4.5 | 4.3 | 4.1 | 4 | 3.7 | 5.1 | 3.8 | 4 | 4.8 |
| Tensile strength | INDEX | 104 | 106 | 108 | 108 | 103 | 104 | 94 | 95 | 114 |
| Tensile elongation | INDEX | 90 | 92 | 94 | 94 | 87 | 92 | 92 | 90 | 102 |
| Tensile characteristics | INDEX | 94 | 98 | 102 | 102 | 90 | 96 | 86 | 86 | 116 |
| 300% modulus | INDEX | 107 | 108 | 109 | 109 | 106 | 102 | 97 | 96 | 116 |
| Compression set | INDEX | 120 | 127 | 142 | 142 | 147 | 116 | 137 | 122 | 130 |
| Static spring constant | INDEX | 104 | 107 | 109 | 110 | 105 | 106 | 104 | 104 | 106 |
| Dynamic spring constant | INDEX | 104 | 109 | 112 | 115 | 115 | 102 | 106 | 102 | 95 |
| Dynamic magnification | INDEX | 108 | 117 | 122 | 127 | 121 | 108 | 110 | 106 | 101 |
| Heat resistance | | 68 | 67 | 67 | 67 | 69 | 61 | 55 | 55 | 65 |
| Flexibility at low temperature | | 1.1 | 0.96 | 0.92 | 0.90 | 0.25 | 0.23 | 0.43 | 0.51 | 4.90 |

Crosslinked rubber to be utilized as vibration isolation rubber is needed to have both heat resistance and dynamic magnification which have no problems in practical use.

It was confirmed that each of the crosslinked rubber compositions obtained in Examples 1 to 42 and Example 49 of the present invention not only maintained processability, but also was excellent in balance among tensile strength, tensile elongation, 300% modulus, compression set, and dynamic magnification, and was also equivalent or excellent in terms of heat resistance, as compared with the crosslinked rubber compositions obtained in Comparative Examples

1 to 17.

((Blending conditions 3) Examples 43 to 48 and Comparative Examples 18 to 19)

· Rubber component (A) (Polymers 1 to 25 of Polymerization Examples 1 to 25, RSS No. 3 as natural rubber, and EP33 (trade name, manufactured by ENEOS Materials Corporation) as EPDM): 100 parts by mass

The amount of addition of each blending agent described below was expressed by the number of parts by mass based on 100 parts by mass of the rubber component (A) including no softener for rubber, and was shown in Table 27.

- Carbon black (B) (trade name "Seast SO" manufactured by Tokai Carbon Co., Ltd.)
- Anti-aging agent: 2-mercaptobenzimidazole
- Naphthenic oil
- Zinc flower
- Stearic acid
- Crosslinker (C) organic peroxide (dicumyl peroxide)

<Kneading method>

The above materials were kneaded by the following method to obtain a rubber composition.

A sealed kneading machine (interior volume 0.3 L) equipped with a temperature control apparatus was used to knead the rubber component, filler (carbon black), naphthenic oil, zinc flower, stearic acid and anti-aging agent at a filling degree of 65% and a number of rotor rotations of 30 to 50 rpm, as the first stage kneading.

The temperature of the sealed kneading machine was here controlled and a blended product at the first stage was obtained at a discharge temperature of 125 to 130°C.

After cooling, peroxide was added and kneaded in an open roll set at 35°C, as the second stage kneading. Thereafter, the resultant was molded and crosslinked with press at 170°C for a predetermined time described in Table 27.

The rubber composition before crosslinking and the crosslinked rubber composition after crosslinking were evaluated. Specifically, evaluation was made by the following methods.

The evaluation results are shown in Table 28.

(Evaluation of processability of rubber composition (cohesiveness of rubber composition))

Evaluation was made by the same evaluation method as the above evaluation of processability of the rubber composition (cohesiveness of the rubber composition).

(Evaluation of physical properties of blended product)

Evaluation was made under the same conditions as those with respect to the Mooney viscosity of the rubber composition before crosslinking, and the tensile strength, tensile elongation, 300% modulus, and compression set of the crosslinked rubber composition, described above.

The results in Examples 43 to 48 and Comparative Example 19 were converted into index numbers under the assumption that each of the evaluation results in Comparative Example 18 was 100, and were shown in Table 28.

The Mooney viscosity was more favorable as the index number was higher, and it was determined that, when was compared with the reference, a value of 70 or more caused no problems in practical use, a value of 85 or more was preferable, and a value of 105 or more had superiority.

Each of properties except for the Mooney viscosity was also more favorable as the index number was higher, and it was determined that, when was compared with the reference, a value of 85 or more caused no problems in practical use and a value of 105 or more had superiority.

The compression set was also measured by the above method.

Here, a value of 100 or more relative to the reference allows for a practically sufficient compression set in packing, seal material, and rubber roller applications, and the compression set is preferably 110 or more, more preferably 120 or more, further preferably 125 or more.

The values of the hardness and the change in hardness before and after heating (the expression (1): change in shore A hardness after heating under air at 100°C for 72 hours compared with that before the heating) of the crosslinked rubber composition, as measured by the above methods, were described. The change in hardness before and after heating was evaluated as causing no problems in practical use when satisfied the expression (1), and was evaluated as causing any problem in practical use when did not satisfy the expression (1).

<Tensile characteristics>

Tensile characteristics were evaluated with the product obtained by multiplying the tensile strength and the tensile elongation of the crosslinked rubber composition, as in tensile characteristics described above. It was determined that, as the values of tensile characteristics were higher, the balance between the tensile strength and the tensile elongation could be improved and a material high in strength was achieved.

Tensile characteristics in Examples 43 to 48 and Comparative Example 19 were converted into index numbers under the assumption that each of the evaluation results in Comparative Example 18 was 100, and were shown in Table 28.

It was determined that a value equal to or more than the reference value (100) was preferable, a value of 85 or more and 100 or less caused no problems in practical use, a value of 75 or more and less than 85 sometimes caused material strength which was not sufficient depending on the intended use, and a value of less than 75 caused insufficient material strength.

<Heat resistance>

It was determined with respect to the heat resistance that the heat resistance was less degraded by heating and more excellent as the numerical value was larger, and the heat resistance was highly degraded by heating and more inferior as the numerical value was smaller.

The values in Examples 43 to 48 and Comparative Example 18 were compared with those in Comparative Example 19, a value of -5 or more and less than +10 exhibited equivalent heat resistance, a value higher by +10 or more exhibited superiority with respect to the heat resistance and a value of less than -5 exhibited inferior heat resistance, and a value of the heat resistance of 65 or more allowed for practical use without any problem, and the value was preferably 70 or more, further preferably 75 or more.

A crosslinked rubber composition to be utilized as a seal material such as a packing, or as a rubber roller is needed to have all heat resistance, tensile characteristics, and compression set which have no problems in practical use.

It was confirmed that each of the crosslinked rubber compositions obtained in Examples 43 to 48 not only maintained processability, but also was excellent in balance among tensile strength, tensile elongation, 300% modulus, and compression set, and also had heat resistance causing no problems in practical use, as compared with the crosslinked rubber compositions obtained in Comparative Examples 18 and 19.

The shore A hardness before heating and the change in shore A hardness after heating compared with that before the heating were measured and evaluated by the same methods as described above.

[Table 27]

| | | Comparative Example 18 | Comparative Example 19 | Example 43 | Example 44 | Example 45 | Example 46 | Example 47 | Example 48 |
|---|---|---|---|---|---|---|---|---|---|
| Polymer 1 | parts by mass | | 100 | | | | | | |
| Polymer 2 | parts by mass | | | 100 | | | | | |
| Polymer 3 | parts by mass | | | | 100 | | | 90 | 70 |
| Polymer 4 | parts by mass | | | | | 100 | | | |
| Polymer 5 | parts by mass | | | | | | | | |
| Polymer 6 | parts by mass | | | | | | | | |
| Polymer 7 | parts by mass | | | | | | 100 | | |
| Polymer 8 | parts by mass | | | | | | | | |
| Polymer 9 | parts by mass | | | | | | | | |
| Polymer 10 | parts by mass | | | | | | | | |
| Polymer 11 | parts by mass | | | | | | | | |
| Polymer 12 | parts by mass | | | | | | | | |
| Polymer 13 | parts by mass | | | | | | | | |
| Polymer 14 | parts by mass | | | | | | | | |
| Polymer 15 | parts by mass | | | | | | | | |
| Polymer 16 | parts by mass | | | | | | | | |
| Polymer 17 | parts by mass | | | | | | | | |
| Polymer 18 | parts by mass | | | | | | | | |
| Polymer 19 | parts by mass | | | | | | | | |
| Polymer 20 | parts by mass | | | | | | | | |
| Polymer 21 | parts by mass | | | | | | | | |
| Polymer 22 | parts by mass | | | | | | | | |
| Polymer 23 | parts by mass | | | | | | | | |
| Polymer 24 | parts by mass | | | | | | | | |
| Polymer 25 | parts by mass | | | | | | | | |

(continued)

| | | Comparative Example 18 | Comparative Example 19 | Example 43 | Example 44 | Example 45 | Example 46 | Example 47 | Example 48 |
|---|---|---|---|---|---|---|---|---|---|
| Natural rubber | parts by mass | | | | | | | 10 | 30 |
| EDPM | parts by mass | 100 | | | | | | | |
| BR | parts by mass | | | | | | | | |
| Iodine value of rubber component A | I g/100 g | 8 | 432 | 151 | 95 | 22 | 95 | 123 | 178 |
| Naphthenic oil | parts by mass | 10 | 10 | 10 | 10 | 10 | 10 | 10 | 10 |
| Carbon black | parts by mass | 50 | 50 | 50 | 50 | 50 | 50 | 50 | 50 |
| Stearic acid | parts by mass | 1 | 1 | 1 | 1 | 1 | 1 | 1 | 1 |
| Zinc flower | parts by mass | 5 | 5 | 5 | 5 | 5 | 5 | 5 | 5 |
| Anti-aging agent | parts by mass | 2 | 2 | 2 | 2 | 2 | 2 | 2 | 2 |
| Organic peroxide | parts by mass | 3 | 3 | 3 | 3 | 3 | 3 | 3 | 3 |
| Crosslinking time | min | 20 | 20 | 20 | 20 | 20 | 20 | 20 | 20 |

[Table 28]

| | | Comparative Example 18 | Comparative Example 19 | Example 43 | Example 44 | Example 45 | Example 46 | Example 47 | Example 48 |
|---|---|---|---|---|---|---|---|---|---|
| Mooney viscosity of rubber composition before vulcanization | INDEX | 100 | 97 | 94 | 97 | 94 | 97 | 94 | 97 |
| Cohesiveness of rubber composition | | ○ | ○ | ○ | ○ | ○ | ○ | ○ | ○ |
| Shore A hardness of crosslinked rubber composition | | 74 | 71 | 73 | 74 | 75 | 74 | 73 | 72 |
| (Shore A hardness after heating) - (Shore A hardness before heating) | | -5 | 6 | 1 | -2 | -2 | -2 | -2 | -4 |
| Tensile strength | INDEX | 100 | 93 | 97 | 102 | 108 | 100 | 98 | 99 |
| Tensile elongation | INDEX | 100 | 88 | 95 | 100 | 103 | 98 | 104 | 99 |
| Tensile characteristics | INDEX | 100 | 82 | 92 | 102 | 111 | 98 | 102 | 92 |
| 300% modulus | INDEX | 100 | 98 | 107 | 116 | 122 | 118 | 112 | 107 |
| Compression set | INDEX | 100 | 142 | 153 | 147 | 124 | 139 | 131 | 111 |
| Heat resistance | | 79 | 60 | 75 | 78 | 83 | 77 | 69 | 66 |

The present application is based on the Japanese Patent Application (Japanese Patent Application No. 2021-148431) filed with JPO on September 13, 2021, the content of which is herein incorporated as reference.

Industrial Applicability

The crosslinked rubber composition of the present invention has industrial applicability as, for example, a material for vibration isolation rubber, vibration insulation rubber, conveyor belts, shoe soles such as outsoles for shoes, weather strips for automobiles, packings or gaskets, seal materials, waterproof sheets, engine mounts, air springs, rubber gloves, medical and sanitary goods, hoses for industrial and various applications, battery cases, adhesives, wire coverings, window frame rubber, rubber stoppers, rubber rollers, and various industrial products.

**Claims**

**1.** A crosslinked rubber composition which is a crosslinked product of a rubber composition comprising

100 parts by mass of a rubber component (A) comprising 10% by mass or more and 100% by mass or less of a hydrogenated conjugated diene-based polymer and having an iodine value of 10 or more and 370 or less, and

10 parts by mass or more and 120 parts by mass or less of carbon black (B), wherein
the hydrogenated conjugated diene-based polymer has a degree of hydrogenation of 10% or more and 99% or less, an aromatic vinyl monomer block content of less than 5% by mass and a weight average molecular weight of 150000 or more and 1500000 or less, and
a change in shore A hardness after heating under air at 100°C for 72 hours compared with that before the heating satisfies the following expression (1):

-10 < (Shore A hardness after heating) - (Shore A hardness before heating) < 5

2. The crosslinked rubber composition according to claim 1, wherein the hydrogenated conjugated diene-based polymer has a glass transition temperature of -50°C or less.

3. The crosslinked rubber composition according to claim 1, wherein an amount of vinyl bond in the hydrogenated conjugated diene-based polymer is 0.1% by mol or more and less than 10% by mol.

4. The crosslinked rubber composition according to claim 1, wherein the hydrogenated conjugated diene-based polymer has a degree of modification of 40% or more and 99% or less.

5. The crosslinked rubber composition according to claim 1, wherein the hydrogenated conjugated diene-based polymer has a Mooney stress relaxation (MSR) at 100°C of 0.8 or less.

6. The crosslinked rubber composition according to claim 1, satisfying the following expression (2):
0.5 MPa < (Storage elastic modulus at a strain of 0.1% at 50°C) - (Storage elastic modulus at a strain of 10% at 50°C) < 10 MPa ... (2)

7. The crosslinked rubber composition according to claim 1, wherein

the rubber component (A) comprises 10% by mass or more and 90% by mass or less of a rubber-like polymer other than the hydrogenated conjugated diene-based polymer, and
the rubber-like polymer other than the hydrogenated conjugated diene-based polymer is at least one selected from the group consisting of styrene-butadiene rubber, styrene-isoprene rubber, natural rubber, polybutadiene, polyisoprene rubber, ethylene-propylene-diene rubber, ethylene-propylene rubber, butyl rubber, polyurethane, epichlorohydrin rubber, silicone rubber, acrylic rubber, nitrile rubber, chloroprene rubber, and fluororubber.

8. The crosslinked rubber composition according to claim 1, wherein the hydrogenated conjugated diene-based polymer has a titanium content of 1 ppm or more and 100 ppm or less and an aluminum content of 2 ppm or less.

9. A method for producing the crosslinked rubber composition according to claim 1, comprising
a step of crosslinking the hydrogenated conjugated diene-based polymer by sulfur and a vulcanization accelerator, or organic peroxide.

10. A method for producing a crosslinked rubber composition containing a rubber component (A) and carbon black (B), comprising

a step of forming a hydrogenated conjugated diene-based polymer having a degree of hydrogenation of 10% or more and 99% or less, an aromatic vinyl monomer block content of less than 5% by mass, a weight average molecular weight of 150000 or more and 1500000 or less, a glass transition temperature of -50°C or less, and an aromatic vinyl monomer unit content of 5% by mass or more,
a step of obtaining a rubber component (A) comprising 10% by mass or more and 100% by mass or less of a hydrogenated conjugated diene-based polymer and having an iodine value of 10 or more and 370 or less,
a step of mixing 100 parts by mass of the rubber component (A) and 10 parts by mass or more and 120 parts by mass or less of carbon black (B) to obtain a rubber composition, and
a step of crosslinking the rubber composition,
wherein a crosslinked rubber composition in which a change in shore A hardness after heating under air at 100°C for 72 hours compared with that before the heating satisfies the following expression (1) is obtained:

-10 < (Shore A hardness after heating) - (Shore A hardness before heating) < 5

**11.** The method for producing crosslinked rubber composition according to claim 9 or 10, wherein, in the crosslinking step, the rubber composition comprising the rubber component (A) and the carbon black (B) is crosslinked in the state of being molded.

**12.** A vibration isolation rubber comprising the crosslinked rubber composition according to any one of claims 1 to 8.

**13.** A conveyor belt comprising the crosslinked rubber composition according to any one of claims 1 to 8.

**14.** A shoe sole comprising the crosslinked rubber composition according to any one of claims 1 to 8.

**15.** A hose comprising the crosslinked rubber composition according to any one of claims 1 to 8.

**16.** A seal material comprising the crosslinked rubber composition according to any one of claims 1 to 8.

**17.** A rubber roller comprising the crosslinked rubber composition according to any one of claims 1 to 8.

## INTERNATIONAL SEARCH REPORT

International application No.
**PCT/JP2022/033791**

**A. CLASSIFICATION OF SUBJECT MATTER**

***C08L 9/06***(2006.01)i; ***C08K 3/04***(2006.01)i; ***C08L 9/00***(2006.01)i
FI: C08L9/06; C08K3/04; C08L9/00

According to International Patent Classification (IPC) or to both national classification and IPC

**B. FIELDS SEARCHED**

Minimum documentation searched (classification system followed by classification symbols)

C08L9/06; C08K3/04; C08L9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/162304 A1 (SUMITOMO RUBBER INDUSTRIES, LTD.) 13 August 2020 (2020-08-13) | 1-17 |
| A | WO 2018/062473 A1 (JSR CORP.) 05 April 2018 (2018-04-05) | 1-17 |
| P, X | WO 2022/149471 A1 (ASAHI KASEI KABUSHIKI KAISHA) 14 July 2022 (2022-07-14) paragraph [0123], table 1, polymerization example 1, paragraphs [0154], [0155], table 4, example 1, paragraph [0177] | 1-17 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/033791**

| Patent document cited in search report | Publication date (day/month/year) | Patent family member(s) | Publication date (day/month/year) |
|---|---|---|---|
| WO 2020/162304 A1 | 13 August 2020 | EP 3912831 A1<br>CN 113329891 A | |
| WO 2018/062473 A1 | 05 April 2018 | US 2019/0218378 A1<br>EP 3521341 A1<br>CN 109790302 A<br>KR 10-2019-0045243 A | |
| WO 2022/149471 A1 | 14 July 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004292679 A
- JP 2018119096 A
- JP 2018035253 A
- WO 2014133097 A
- WO 9605250 A
- JP 2000053706 A
- WO 2003085010 A
- WO 2019151126 A
- WO 2019151127 A
- WO 2002002663 A
- WO 2015006179 A
- JP H1275605 A
- JP H2172537 A
- JP H496904 A
- JP H833846 A
- JP H841081 A
- WO 2014046016 A
- WO 2014046017 A
- WO 2014065283 A
- WO 2017090714 A
- JP 2021148431 A

### Non-patent literature cited in the description

- **I. M. KOLTHOFF et al.** *J. Polym. Sci.,* 1946, vol. 1, 429
- **J. BICERANO.** Prediction of Polymer Properties. MarcelDekker, 2002
- **JOZEF. BICERANO.** PREDICTION OF POLYMER PROPERTIES. Marcel Dekker, 2002
- *Kautschuk Gummi Kunststoffe,* 1999, vol. 52 (12), 799